# EUROPÄISCHE PATENTANMELDUNG

(11) **EP 3 131 033 A1**
(43) Veröffentlichungstag der Anmeldung: **15.02.2017**
(21) Anmeldenummer: 15181116.3
(22) Anmeldetag: 14.08.2015
(51) Int. Cl.: G06F 21/57, H04L 29/06

(54) **VERFAHREN UND KOMMUNIKATIONSSYSTEM ZUR GESICHERTEN UND AUTOMATISIERTEN KOMMUNIKATION**

(71) Anmelder: Deutsche Telekom AG, 53113 Bonn (DE)
(72) Erfinder: Breuer, Jörg, 57223 Kreuztal (DE); Moos, Rainer, 57080 Siegen (DE)
(74) Vertreter: Blumbach Zinngrebe

(57) **Zusammenfassung**

Die Erfindung betrifft ein Verfahren sowie ein Kommunikationssystem (10, 10', 10") zur gesicherten und automatisierten Kommunikation zwischen einer Datenverwaltungseinrichtung (70, 80; 100, 110; 150, 160) und einer Hardware-Sicherheitseinrichtung (170, 170') einer Kommunikationseinrichtung (20, 30; 120, 130, 180), die ermöglichen, dass Informationen auch mit der Hardware-Sicherheitseinrichtung (170, 170') einer Kommunikationseinrichtung (20, 30; 120, 130, 180), die nicht immer permanent erreichbar ist, authentisch, integritätsgesichert, vertraulich und automatisiert ausgetauscht werden können, um beispielsweise notwendige Sicherheitsupdates, Administrationstätigkeiten oder andere Lifecycle-Prozesse für die Handware-Sicherheitseinrichtung (170, 170') zu unterstützen.

## Beschreibung

Die Erfindung betrifft ein Verfahren sowie ein Kommunikationssystem zur gesicherten und automatisierten Kommunikation zwischen einer Datenverwaltungseinrichtung und einer Kommunikationseinrichtung über wenigstens ein Kommunikationsnetzwerk.

Heutzutage kommunizieren Menschen überwiegend über Telefon, Mobilfunk oder mithilfe des Internets per Email, Facebook, Twitter oder anderer Wege.

Um eine solche Kommunikation zu ermöglichen, benötigt man zum Beispiel einen Zugang zum Telefonnetz, zum Mobilfunknetz oder zum Internet. Die Verbindung ins Internet erfolgt dabei über Internetprovider, die man über unterschiedlichste Netze erreichen kann. Für die Kommunikation selbst werden Smartphones, Tablets, Wearables oder PCs in unzähligen Ausprägungen genutzt.

Zukünftig werden aber nicht nur Menschen kommunizieren, sondern auch Maschinen beziehungsweise Geräte werden vermehrt aktiv in die Kommunikation mit einbezogen. Damit zwischen allen Beteiligten sinnvoll und authentisch Informationen ausgetauscht werden können, müssen im Zeitalter von Industrie 4.0 oder Internet of Things immer mehr solcher Komponenten eine elektronische Identität erhalten. Die Einführung dieser elektronischen Identitäten erfolgt sinnvoller Weise in Form von sogenannten Sicherheitstoken, die kryptografisch gesichert, die jeweilige Identität einmalig machen. Mit einer steigenden Anzahl solcher Komponenten werden auch die Anzahl der Angriffe und damit die Sicherheitsanforderungen steigen. Deshalb müssen die Sicherheitstoken solcher Komponenten auf dem aktuellen Stand gehalten werden, um insbesondere die Zuverlässigkeit der Sicherheitsmechanismen kontinuierlich gewährleisen zu können.

Zukünftig wird es immer wichtiger, mit Komponenten, welche einen Sicherheitstoken besitzen, zielgerichtet zu kommunizieren, um beispielsweise Sicherheitsupdates oder andere Life Cycle Prozesse für die Sicherheitstoken zu unterstützen. Die Aktualisierung von Kommunikationseinrichtungen mit einer HardwareSicherheitseinrichtung wird jedoch mit zunehmender Anzahl immer aufwendiger und kostenintensiver.

Der Erfindung liegt daher die Aufgabe zugrunde, ein Verfahren sowie ein Kommunikationssystem zur Verfügung zu stellen, mit denen eine Kommunikation zwischen einer Datenverwaltungseinrichtung und einer Kommunikationseinrichtung, welche eine Hardware-Sicherheitseinrichtung aufweist, in kostengünstiger und einfacher Weise ermöglicht wird, auch wenn die Kommunikationseinrichtung nicht permanent erreichbar sein wird.

Ein Kerngedanke der Erfindung kann darin gesehen werden, auch mit Kommunikationseinrichtungen, die nicht immer permanent erreichbar sind, gesichert und automatisiert zu kommunizieren, um beispielsweise notwendige Sicherheitsupdates, Administrationstätigkeiten oder andere Lifecycle-Prozesse für die Handware-Sicherheitseinrichtung zu unterstützen.

Ein weiterer Aspekt der Erfindung kann darin gesehen werden, dass hierbei in beide Richtungen zwischen der Datenverwaltungseinrichtung und der Hardware-Sicherheitseinrichtung der Kommunikationseinrichtung kommuniziert werden kann. Mit anderen Worten kann vorgesehen sein, dass die Hardware-Sicherheitseinrichtung einer Kommunikationseinrichtung, beispielsweise Sicherheitsupdates empfangen, aber auch Informationen, beispielsweise zum eigenen Sicherheitsstatus oder zu Angriffen auf die Kommunikationseinrichtung, selbst zur Datenverwaltungseinrichtung übertragen kann.

Damit diese Informationen nicht verändert oder abgehört werden können, müssen diese Informationen über die gesamte Kommunikationsstrecke hinweg gesichert, d.h. authentisch, integritätsgesichert und vertraulich übertragen werden können.

Das oben genannte technische Problem wird zum einen mit den Verfahrensschritten des Anspruchs 1 gelöst.

Demnach wird ein Verfahren zur gesicherten und automatisierten Kommunikation zwischen einer Datenverwaltungseinrichtung und einer Kommunikationseinrichtung eines Kommunikationssystems, welches wenigstens ein Kommunikationsnetzwerk aufweist, verfügbar gemacht. Das Verfahren weist folgende Schritte auf:
a) Aufbauen einer Kommunikationsverbindung zwischen einer Datenverwaltungseinrichtung und einer in einer Kommunikationseinrichtung angeordneten Hardware-Sicherheitseinrichtung über wenigstens ein Kommunikationsnetzwerk für ein Zeitintervall begrenzter Länge, wobei die Datenverwaltungseinrichtung und die Kommunikationseinrichtung eindeutig einander zugeordnet sind und wobei die Hardware-Sicherheitseinrichtung zur Identifizierung der Kommunikationseinrichtung ausgebildet ist;
b) Identifizierung der Kommunikationseinrichtung gegenüber der Datenverwaltungseinrichtung;
c) Prüfen, in der Datenverwaltungseinrichtung, ob ein Kommunikationsauftrag bezüglich der Kommunikationseinrichtung vorliegt;
d) wenn ja, Abarbeiten, unter Steuerung der Datenverwaltungseinrichtung, des Kommunikationsauftrags nach erfolgreicher Identifizierung, indem Daten gesichert über die in Schritt a) aufgebaute Kommunikationsverbindung übertragen werden.

Angemerkt sei, dass unter dem Ausdruck "gesicherte Kommunikation" vorzugsweise zu verstehen ist, dass eine Information über die gesamte Kommunikationsstrecke zwischen der Datenverwaltungseinrichtung und der Kommunikationseinrichtung hinweg authentisch, integritätsgesichert und vertraulich übertragen wird. Eine Technik, die dies ermöglicht, ist zum Beispiel die IP-Security-Technology in Verbindung mit der Message-Authentication-Code-Technology, kurz auch MAC genannt.

Bei der Kommunikationseinrichtung, welche eine Hardware-Sicherheitseinrichtung enthält, kann es sich zum Beispiel um eine mobile kontaktbehaftete und/oder kontaktlose Kommunikationseinrichtung, wie zum Beispiel um eine Chipkarte, eine mobile drahtlose Kommunikationseinrichtung, wie zum Beispiel ein Smartphone, oder um eine stationäre drahtlose und/oder kontaktbehaftete Kommunikationseinrichtung handeln.

Mit dem Verfahrenschritt "Aufbau einer
Kommunikationsverbindung zwischen einer
Datenverwaltungseinrichtung und einer
Kommunikationseinrichtung für ein Zeitintervall begrenzter Länge" wird beispielsweise auch der Fall erfasst, dass der Kontakt zwischen der Datenverwaltungseinrichtung und einer eine Hardware-Sicherheitseinrichtung enthaltende Kommunikationseinrichtung sehr schnell, das heißt beispielsweise bereits nach einigen Sekunden oder weniger aus welchen Gründen auch immer abbricht.

Mit dem Ausdruck "Kommunikationsauftrag" werden insbesondere Informationen identifiziert, die für die Kommunikationseinrichtung, beziehungsweise für die Hardware-Sicherheitseinrichtung der Kommunikationseinrichtung bereitstehen. Ein Kommunikationsauftrag kann auch Informationen zugeordnet sein, die von der Hardware-Sicherheitseinrichtung der Kommunikationseinrichtung zur Datenverwaltungseinrichtung übertragen werden sollen.

Vorzugsweise betrifft ein Kommunikationsauftrag Sicherheitsupdates für eine in der Hardware-Sicherheitseinrichtung der Kommunikationseinrichtung hinterlegten Software, Upgrades, Patches, Sperr- oder Deaktivierungsbefehle, um beispielsweise die Kommunikationseinrichtung bzw. die Hardware-Sicherheitseinrichtung aus der Ferne sperren oder deaktivieren zu können, oder andere Informationen, die in der Datenverwaltungseinrichtung vorliegen und für die Kommunikationseinrichtung beziehungsweise deren Hardware-Sicherheitseinrichtung bestimmt sind.

Darüber hinaus kann, wie bereits erwähnt, ein Kommunikationsauftrag auch Informationen betreffen, welche von der Hardware-Sicherheitseinrichtung der Kommunikationseinrichtung zur Datenverwaltungseinrichtung übertragen werden sollen. Solche Informationen können zum Beispiel Statusinformationen oder aktuelle Standortinformationen der Kommunikationseinrichtung sein. Die Informationen können auch vertrauenswürdige Nachrichten, Kurznachrichten, E-Mails, Steuerungsinformationen und/oder dergleichen enthalten.

Für den Fall, dass die in Schritt a) aufgebaute Kommunikationsverbindung abbricht, bevor der gesamte Kommunikationsauftrag abgearbeitet worden ist, dass heißt, bevor die gesamte zum Kommunikationsauftrag gehörende Informationen zur Kommunikationseinrichtung beziehungsweise zur Hardware-Sichereinrichtung übertragen worden ist, kann in der Datenverwaltungseinrichtung geprüft werden, ob der Kommunikationsauftrag während der in Schritt a) aufgebauten Kommunikationsverbindung vollständig abgearbeitet worden ist. Wenn nicht, werden die Schritte a) bis e) solange wiederholt, bis der Kommunikationsauftrag vollständig abgearbeitet, das heißt insbesondere die zum Kommunikationsauftrag gehörenden Informationen vollständig von der Handware-Sicherheitseinrichtung der Kommunikationseinrichtung empfangen worden sind.

Das oben genannte technische Problem wird auch mit den Verfahrenschritten des Anspruchs 3 gelöst.

Demnach wird ein Verfahren zum gesicherten und automatisierten Kommunikation zwischen einer Datenverwaltungseinrichtung und einer Kommunikationseinrichtung eines Kommunikationssystems, welches wenigstens ein Kommunikationsnetzwerk aufweist, zur Verfügung gestellt.

Das Verfahren weist folgende Schritte auf:
a) Aufbauen einer Kommunikationsverbindung zwischen einer zentralen Managementeinrichtung und einer in einer Kommunikationseinrichtung implementierten Hardware-Sicherheitseinrichtung über wenigstens ein Kommunikationsnetzwerk, wobei die Hardware-Sicherheitseinrichtung zur Identifizierung der Kommunikationseinrichtung ausgebildet ist;
b) Identifizierung der Kommunikationseinrichtung gegenüber der zentralen Managementeinrichtung;
c) nach erfolgreicher Identifizierung Aufbauen, unter Steuerung der zentralen Managementeinrichtung, einer Kommunikationsverbindung zwischen einer Datenverwaltungseinrichtung und der Hardware-Sicherheitseinrichtung der Kommunikationseinrichtung über das wenigstens ein Kommunikationsnetzwerk für ein Zeitintervall begrenzter Länge, wobei die Datenverwaltungseinrichtung und die Kommunikationseinrichtung eindeutig einander zugeordnet sind;
d) Prüfen, in der Datenverwaltungseinrichtung, ob ein Kommunikationsauftrag bezüglich der Kommunikationseinrichtung vorliegt;
e) wenn ja, Abarbeiten, unter Steuerung der Datenverwaltungseinrichtung, des Kommunikationsauftrags, indem Daten gesichert über die in Schritt c) aufgebaute Kommunikationsverbindung übertragen werden.

Damit sichergestellt werden kann, dass ein Kommunikationsauftrag vollständig von der

Datenverwaltungseinrichtung abgearbeitet worden ist, wird in der Datenverwaltungseinrichtung zweckmäßigerweise geprüft, ob der Kommunikationsauftrag während der in Schritt c) aufgebauten sicheren Kommunikationsverbindung vollständig abgearbeitet worden ist. Wenn nicht, werden die Schritte a) bis f) des Anspruchs 3 solange wiederholt, bis der Kommunikationsauftrag vollständig abgearbeitet worden ist.

Gemäß einem Ausführungsbeispiel kommuniziert die Datenverwaltungseinrichtung direkt mit der Hardware-Sicherheitseinrichtung der Kommunikationseinrichtung.

Gemäß einem alternativen Ausführungsbeispiel ist die Kommunikationseinrichtung eine drahtlose Kommunikationseinrichtung, die indirekt mit der Datenverwaltungseinrichtung verbunden wird, indem in Schritt a) des Anspruchs 1 eine Kommunikationsverbindung über einen drahtlosen Zugangspunkt des Kommunikationssystems aufgebaut werden kann, sobald die drahtlose Kommunikationseinrichtung in den Versorgungsbereich des drahtlosen Zugangspunkte gelangt, oder die Kommunikationseinrichtung ist eine kontaktbehaftete Kommunikationseinrichtung, die indirekt mit der Datenverwaltungseinrichtung verbunden wird, indem in Schritt a) eine Kommunikationsverbindung über eine kontaktbehaftete Einrichtung (190) des Kommunikationssystems aufgebaut werden kann, sobald die kontaktbehaftete Kommunikationseinrichtung mit der kontaktbehafteten Einrichtung elektrisch verbunden ist. Die kontaktbehaftete Einrichtung kann als Kartenleser ausgebildet sein, welche mit dem wenigstens einen Kommunikationsnetzwerk verbunden sein kann. Bei dem drahtlosen Zugangspunkt kann es vorzugsweise um einen WLAN-Zugangspunkt, auch WLAN Access Point genannt, handeln.

Eine indirekte Verbindung liegt auch vor, wenn die Kommunikationseinrichtung eine mobile kontaktbehaftete Kommunikationseinrichtung ist, welche zum Beispiel in eine kontaktbehaftete Kartenleseeinrichtung eingesetzt wird, wobei die Kartenleseeinrichtung über wenigstens ein Kommunikationsnetzwerk mit der Datenverwaltungseinrichtung verbunden wird.

Ist die Kommunikationseinrichtung eine drahtlose Kommunikationseinrichtung kann in ähnlicher Weise in den Schritten a) und c) des Anspruches 3 jeweils eine Kommunikationsverbindung über einen drahtlosen Zugangspunkt des Kommunikationssystems aufgebaut werden, sobald die drahtlose Kommunikationseinrichtung in den Versorgungsbereich des drahtlosen Zugangspunktes gelangt. Oder, wenn die Kommunikationseinrichtung eine kontaktbehaftete Kommunikationseinrichtung ist, kann in den Schritten a) und c) jeweils eine Kommunikationsverbindung über eine kontaktbehaftete Einrichtung des Kommunikationssystems aufgebaut werden kann, sobald die kontaktbehaftete Kommunikationseinrichtung mit der kontaktbehafteten Einrichtung elektrisch verbunden wird.

Vorzugsweise ist die drahtlose Kommunikationseinrichtung eine bewegliche Kommunikationseinrichtung und der drahtlose Zugangspunkt stationär.

Alternativ kann auch die drahtlose

Kommunikationseinrichtung stationär und der drahtlose Zugangspunkt beweglich sein.

Eine bewegliche drahtlose Kommunikationseinrichtung kann beispielsweise ein Smartphone, ein Tablet, Wearables and dergleichen sein. Ein beweglicher drahtloser Zugangspunkt kann beispielsweise ein öffentlicher WLAN-Zugangspunkt, auch Hotspot genannt, sein, der beispielsweise in einem Fahrzeug implementiert ist. Eine stationäre drahtlose Kommunikationseinrichtung kann beispielsweise ein Sensor sein, der in Straßennähe, beispielsweise in einer Lampe oder einer Ampel integriert ist.

Um der Datenverwaltungseinrichtung signalisieren zu können, dass ein Kommunikationsauftrag vollständig abgearbeitet worden ist, kann von der Kommunikationseinrichtung, beziehungsweise von der Hardware-Sicherheitseinrichtung der Kommunikationseinrichtung, eine Statusinformation zur Datenverwaltungseinrichtung übertragen werden, welche die vollständige Abarbeitung des Kommunikationsauftrags, das heißt beispielsweise den vollständigen Empfang der zu einem Kommunikationsauftrag gehörenden Information oder deren vollständige Verarbeitung in der Kommunikationseinrichtung signalisiert.

Von der Kommunikationseinrichtung kann auch eine weitere Statusinformation zur Datenverwaltungseinrichtung übertragen werden, welche der Datenverwaltungseinrichtung signalisiert, dass die Information, welche zu dem Kommunikationsauftrag gehört, noch nicht vollständig empfangen worden ist. Besonders vorteilhaft ist es, wenn die Statusinformation der Datenverwaltungseinrichtung auch noch signalisiert, an welcher Stelle die Abarbeitung des Kommunikationsauftrags beziehungsweise an welcher Stelle die Übertragung der Information abgebrochen worden ist, um eine nahtlose Abarbeitung des Kommunikationsauftrags beziehungsweise eine nahtlose und somit vollständige Übertragung der Information zu ermöglichen.

Um ein Höchstmaß an Vertraulichkeit zu erreichen, werden die zur Kommunikationseinrichtung zu übertragenden Informationen vorzugsweise verschlüsselt in der Datenverwaltungseinrichtung gespeichert. Das bedeutet, dass selbst in der Datenverwaltungseinrichtung die für die Hardware-Sicherheitseinrichtung der Kommunikationseinrichtung bestimmte Information niemals im Klartext vorliegt und folglich auch nicht mitgelesen werden kann.

Wie bereits erwähnt, kann die zur Kommunikationseinrichtung beziehungsweise zur Hardware-Sicherheitseinrichtung der Kommunikationseinrichtung zu übertragende Information sicherheitsbezogener Daten, insbesondere Sicherheitsupdates für eine in der Kommunikationseinrichtung bzw. der Hardware-Sicherheitseinrichtung gespeicherte Sicherheitssoftware, enthalten.

Liegen beispielsweise in der Datenverwaltungseinrichtung unterschiedliche Kommunikationsaufträge vor, wobei zumindest einer der Kommunikationsaufträge die Übertragung einer Information von der Kommunikationseinrichtung zur Datenverwaltungseinrichtung betreffen kann, wird die Abarbeitung der unterschiedlichen Kommunikationsaufträge von der Datenverwaltungseinrichtung priorisiert. Mit anderen Worten erfolgt die Abarbeitung der unterschiedlichen Kommunikationsaufträge in einer festgelegten Reihenfolge, wobei die Kommunikationsaufträge entsprechend ihrer Wichtigkeit priorisiert werden.

Eine zweckmäßig Ausgestaltung sieht vor, dass eine in Schritt a) gemäß Anspruch 1 oder eine in Schritt c) gemäß Anspruch 3 aufgebaute Kommunikationsverbindung von der Datenverwaltungseinrichtung beendet werden kann, wenn kein Kommunikationsauftrag in der Datenverwaltungseinrichtung vorliegt, das heißt, wenn weder Informationen von der Hardware-Sicherheitseinrichtung der Kommunikationseinrichtung zur Datenverwaltungseinrichtung noch Informationen von der Datenverwaltungseinrichtung zur Hardware-Sicherheitseinrichtung übertragen werden sollen.

Das oben genannte technische Problem wird auch durch die Merkmale des Anspruchs 14 gelöst.

Demnach ist ein Kommunikationssystem zur gesicherten und automatisierten Kommunikation zwischen einer Datenverwaltungseinrichtung und einer Kommunikationseinrichtung vorgesehen, welches folgende Merkmale aufweist:
- wenigstens ein Kommunikationsnetzwerk,
- eine Kommunikationseinrichtung, welche eine Hardware-Sicherheitseinrichtung zur Identifizierung der Kommunikationseinrichtung aufweist,
- eine Datenverwaltungseinrichtung, die der Kommunikationseinrichtung eindeutig zugeordnet ist, wobei die Datenverwaltungseinrichtung eine Speichereinrichtung aufweist, in welcher wenigstens eine Information für die Hardware-Sicherheitseinrichtung der Kommunikationseinrichtung speicherbar ist,
   wobei die Kommunikationseinrichtung dazu ausgebildet ist, unter Ansprechen auf ein vorbestimmtes, sich wiederholendes Ereignis jeweils den Aufbau einer zeitlich begrenzten Kommunikationsverbindung über das wenigstens eine Kommunikationsnetzwerk von der Hardware-Sicherheitseinrichtung zur Datenverwaltungseinrichtung einzuleiten und sich gegenüber der Datenverwaltungseinrichtung zu identifizieren, wobei die Datenverwaltungseinrichtung dazu ausgebildet ist,
- zu prüfen, ob ein Kommunikationsauftrag bezüglich der Kommunikationseinrichtung vorliegt,
- wenn ja, die Abarbeitung des Kommunikationsauftrags nach erfolgreicher Identifizierung der Kommunikationseinrichtung zu steuern, indem Daten gesichert über die jeweilige aufgebaute Kommunikationsverbindung übertragen werden.

Das oben genannte technische Problem wird ebenfalls mit den Merkmalen des Anspruchs 15 gelöst.

Demnach ist ein Kommunikationssystem zur gesicherten und automatisierten Kommunikation zwischen einer Datenverwaltungseinrichtung und einer Kommunikationseinrichtung vorgesehen, welches folgende Merkmale aufweist:
- wenigstens ein Kommunikationsnetzwerk,
- eine zentrales Managementeinrichtung,
- eine Kommunikationseinrichtung, welche eine Hardware-Sicherheitseinrichtung zur Identifizierung der Kommunikationseinrichtung aufweist,
- eine Datenverwaltungseinrichtung, die der Kommunikationseinrichtung eindeutig zugeordnet ist, wobei die Datenverwaltungseinrichtung eine Speichereinrichtung aufweist, in welcher wenigstens eine Information für die Hardware-Sicherheitseinrichtung der Kommunikationseinrichtung speicherbar ist,
   wobei die Kommunikationseinrichtung dazu ausgebildet ist, unter Ansprechen auf ein vorbestimmtes, sich wiederholendes Ereignis jeweils den Aufbau einer Kommunikationsverbindung über das wenigstens eine Kommunikationsnetzwerk von der Hardware-Sicherheitseinrichtung zur zentralen Managementeinrichtung einzuleiten und sich gegenüber der zentralen Managementeinrichtung zu identifizieren, wobei die zentrale Managementeinrichtung dazu ausgebildet ist, nach jeder erfolgreichen Identifizierung der Kommunikationseinrichtung den Aufbau
   einer zeitlich begrenzten Kommunikationsverbindung zwischen der Hardware-Sicherheitseinrichtung der Kommunikationseinrichtung und der Datenverwaltungseinrichtung über das wenigstens eine Kommunikationsnetzwerk zu steuern, wobei die Datenverwaltungseinrichtung dazu ausgebildet ist,
- zu prüfen, ob ein Kommunikationsauftrag bezüglich der Kommunikationseinrichtung vorliegt, und
- wenn ja, die Abarbeitung des Kommunikationsauftrags zu steuern, indem Daten gesichert über die jeweilige aufgebaute Kommunikationsverbindung übertragen werden.

Vorzugsweise ist die Datenverwaltungseinrichtung dazu ausgebildet, zur prüfen, ob der Kommunikationsauftrag während einer aufgebauten sicheren Kommunikationsverbindung vollständig abgearbeitet worden ist, und wenn nicht, die Abarbeitung des Kommunikationsauftrages während wenigstens einer weiteren, zwischen der Kommunikationseinrichtung und der Datenverwaltungseinrichtung aufgebauten Kommunikationsverbindung fortzusetzen.

Gemäß einer besonderen Ausführungsform ist wenigstens ein drahtloser Zugangspunkt vorgesehen, welcher mit dem wenigstens ein Kommunikationsnetzwerk verbunden ist, wobei die Kommunikationseinrichtung eine drahtlose Kommunikationseinrichtung ist und dazu ausgebildet ist, den Eintritt in der Versorgungsbereich des wenigstens einen drahtlosen Zugangspunkt zu erfassen und unter Ansprechen hierauf den Aufbau einer Kommunikationsverbindung über den drahtlosen Zugangspunkt zur Datenverwaltungseinrichtung oder zur zentralen Managementeinrichtung einzuleiten.

Beispielsweise kann wenigstens eine kontaktbehaftete Einrichtung, wie zum Beispiel eine Kartenleseeinrichtung, welche mit dem wenigstens einen Kommunikationsnetzwerk verbunden ist, vorgesehen sein, wobei die Kommunikationseinrichtung eine kontaktbehaftete Kommunikationseinrichtung ist und dazu ausgebildet ist, eine elektrische Verbindung oder Kontaktierung mit der wenigstens einen kontaktbehafteten Einrichtung zu erfassen und unter Ansprechen hierauf den Aufbau einer Kommunikationsverbindung über die kontaktbehaftete Einrichtung zu der ihr eindeutig zugeordneten Datenverwaltungseinrichtung oder zur zentralen Managementeinrichtung einzuleiten.

An dieser Stelle sei angemerkt, dass die Ansprüche auch den Fall mit abdecken, dass mehrere Datenverwaltungseinrichtungen und mehrere Kommunikationseinrichtungen mit jeweils einer Hardware-Sicherheitseinrichtung vorgesehen sind, wobei zwischen jeder Datenverwaltungseinrichtung und ihr eindeutig zugeordneter Kommunikationseinrichtung jeweils eine Kommunikationsverbindung aufgebaut werden kann.

Bei der Hardware-Sicherheitseinrichtung, die auch als Sicherheitstoken bezeichnet werden kann, kann es sich um eine Chip-Karte, eine SIM-Karte, oder beliebige Hardware-Sicherheitsmodule handeln, welche eine vertrauenswürdige Laufzeitumgebung, auch Trusted Execution Environment (TEE) darstellen.

Der Erfindung wird nachfolgend anhand einiger Ausführungsbeispiele in Verbindung mit den beiliegenden Zeichnungen näher erläutert. Gleiche Bezugszeichen beziehen sich auf gleiche Einrichtungen. Es zeigen:
- Fig. 1: ein beispielhaftes Kommunikationssystem mit einer indirekten Verbindung zwischen zwei drahtlosen Kommunikationseinrichtungen und zwei Datenverwaltungseinrichtungen,
- Fig. 2: ein alternatives beispielhaftes Kommunikationssystem mit einer zentralen Managementeinrichtung, wobei jede drahtlose Kommunikationseinrichtung wie in Fig. 1 jeweils über eine indirekte Verbindung mit der eindeutig zugeordneten Datenverwaltungseinrichtung verbunden ist,
- Fig. 3: ein weiteres beispielhaftes Kommunikationssystem, in dem drahtlose Kommunikationseinrichtungen direkt mit Datenverwaltungseinrichtungen verbunden sind,
- Fig. 4: ein beispielhaftes Blockschaltbild der in Fig. 1 und 2 gezeigten mobilen drahtlosen Kommunikationseinrichtung,
- Fig. 5: ein beispielhaftes Blockschaltbild der in Fig. 1 gezeigten Datenverwaltungseinrichtung,
- Fig. 6: ein beispielhaftes Blockschaltbild einer in Fig. 1 und 2 gezeigten stationären drahtlosen Kommunikationseinrichtung, und
- Fig. 7: ein beispielhaftes Kommunikationssystem mit einer indirekten Verbindung zwischen einer drahtlosen Kommunikationseinrichtung und einer Datenverwaltungseinrichtung sowie zwischen einer kontaktbehafteten Kommunikationseinrichtung und einer Datenverwaltungseinrichtung.

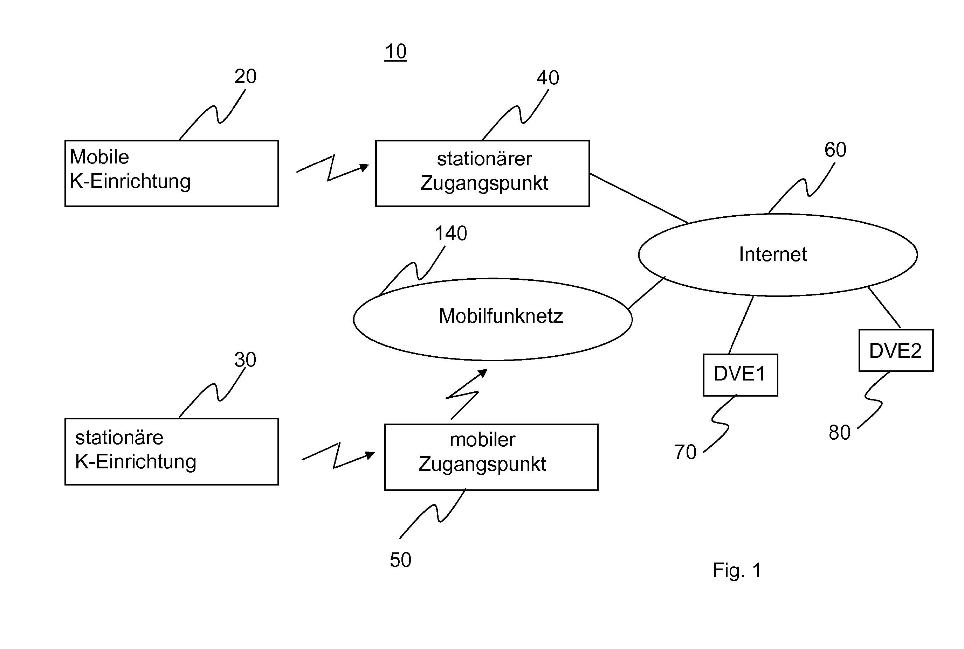

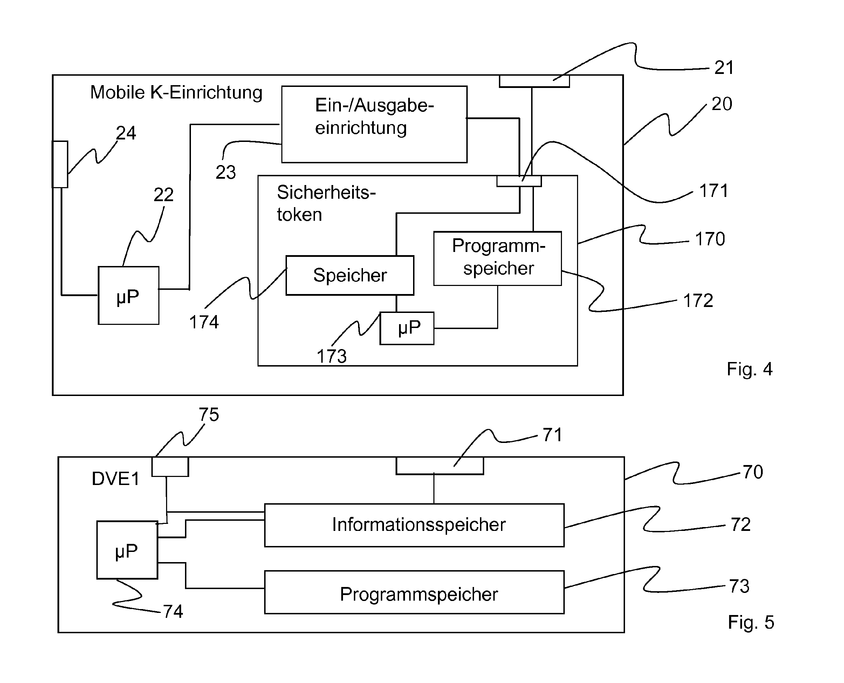

In Fig. 1 ist ein beispielhaftes Kommunikationssystem 10 zur gesicherten und automatisierten Kommunikation zwischen einer Datenverwaltungseinrichtung und einer Hardware-Sicherheitseinrichtung einer drahtlosen Kommunikationseinrichtung ausschnittsweise dargestellt. Das Kommunikationssystem 10 weist wenigstens ein Kommunikationsnetzwerk auf. Im vorliegenden Beispiel sind zwei Kommunikationsnetzwerke 60 und 140 dargestellt, wobei das eine Kommunikationsnetzwerk 60 das Internet und das andere Kommunikationsnetzwerk 140 ein Mobilfunknetz sein kann. Weiterhin ist eine mobile drahtlose Kommunikationseinrichtung 20 dargestellt, die, wie in Fig. 4 gezeigt, eine Hardware-Sicherheitseinrichtung 170, welche auch als Sicherheitstoken bezeichnet werden kann, aufweist. Selbstverständlich kann das Kommunikationssystem 10 mehrere mobile drahtlose Kommunikationseinrichtungen aufweisen. Die drahtlose mobile Kommunikationseinrichtung 20 kann beispielsweise ein Smartphone sein, welche über Funktionen herkömmlicher Smartphones verfügen kann. In diesem Fall kann die Hardware-Sicherheitseinrichtung 170 eine SIM-Karten-Funktionalität enthalten. Angemerkt sei, dass die mobile drahtlose Kommunikationseinrichtung 20 auch Funktionen eines herkömmlichen Smartphones ausführen kann.Die Hardware-Sicherheitseinrichtung 170 dient unter anderem der Identifizierung der mobilen drahtlosen Kommunikationseinrichtung 20. Hierzu kann eine eindeutige Kennung in einem Speicher 174 abgelegt sein. Die Hardware-Sicherheitseinrichtung 170 kann ferner einen Programmspeicher 172 aufweisen, in dem Anweisungen zur Durchführung verschiedener Sicherheitsfunktionen und/oder kryptografischer Funktionen abgelegt sein können.

Im Speicher 174 können ferner die zur Ausführung einer kryptografischen Funktion benötigten Sicherheitsschlüssel gespeichert sein. Die Steuerung der Hardware-Sicherheitseinrichtung 170 übernimmt eine Steuereinheit 173, welche ein Mikrocontroller oder ein Mikroprozessor sein kann, wie dies in Fig. 4 gezeigt ist. Weiterhin weist die Hardware-Sicherheitseinrichtung 170 in an sich bekannter Weise eine Kommunikationsschnittstelle 171 auf, über die sie mit der mobilen drahtlosen Kommunikationseinrichtung 20 kommunizieren kann. Die mobile drahtlose Kommunikationseinrichtung 20 kann, wie in Fig. 4 gezeigt, weiterhin eine Ein- und/oder Ausgabeeinrichtung 23 sowie eine Steuereinheit 22 aufweisen, die die Funktionen der mobilen drahtlosen Kommunikationseinrichtung 20 steuert. Über die Ein- und/oder Ausgabeeinrichtung 23 können zum Beispiel Informationen, die im Speicher 174 der Hardware-Sicherheitseinrichtung 170 abgelegt sind, angezeigt werden. Vorzugsweise ist der Zugriff auf die Hardware-Sicherheitseinrichtung 170 passwortgeschützt.

Wie Fig. 4 zeigt, weist die mobile drahtlose Kommunikationseinrichtung 20 eine drahtlose Kommunikationsschnittstelle 21 auf, über die sie direkt über das Mobilfunknetz 140 kommunizieren kann. Weiterhin kann die mobile drahtlose Kommunikationseinrichtung 20 wenigstens eine weitere drahtlose Kommunikationsschnittstelle 24 aufweisen, welche beispielsweise gemäß dem NFC-Standard, dem Bluetooth-Standard oder dem WLAN-Standard aufgebaut ist. Im vorliegenden Beispiel sei angenommen, dass die drahtlose Kommunikationsschnittstelle 24 zur Kommunikation mit öffentlichen stationären WLAN-Zugangspunkten ausgebildet ist. In Fig. 1 ist lediglich ein öffentlicher stationärer Zugangspunkt 40 dargestellt. Über den stationären Zugangspunkt 40 kann die mobile drahtlose Kommunikationseinrichtung 20 auf das Internet 60 zugreifen.

An das Kommunikationsnetzwerk 60 ist wenigstens eine Datenverwaltungseinrichtung angeschlossen sein. In Fig. 1 sind der einfacheren Darstellung wegen lediglich zwei Datenverwaltungseinrichtungen 70 und 80 gezeigt.

In Fig. 5 ist ein beispielhaftes Blockschaltbild der Datenverwaltungseinrichtung 70 gezeigt. Die Datenverwaltungseinrichtung 70 weist vorzugsweise eine Steuereinheit 74 auf, die als Mikroprozessor oder Mikrokontroller ausgebildet sein kann. Ferner ist ein Informationsspeicher 72 vorgesehen, in dem wenigstens eine Information, welche im vorliegenden Beispiel für die mobile drahtlose Kommunikationseinrichtung 20 bestimmt ist, gespeichert werden kann, welche unter Abarbeitung eines entsprechenden Kommunikationsauftrag zur mobilen drahtlosen Kommunikationseinrichtung 20 übertragen werden kann. Die im Informationsspeicher 72 hinterlegten Informationen sind vorzugsweise verschlüsselt.

Bereits an dieser Stelle sei angemerkt, dass zwischen der mobilen drahtlosen Kommunikationseinrichtung 20 und der Datenverwaltungseinrichtung 70 eine eindeutige Zuordnung besteht. Das bedeutet, dass die Datenverwaltungseinrichtung 70 Informationen nur zur Hardware-Sicherheitseinrichtung 170 der mobilen Kommunikationseinrichtung 20 und umgekehrt, die Hardware-Sicherheitseinrichtung 170 der mobile Kommunikationseinrichtung 20 Informationen nur zur Datenverwaltungseinrichtung 70 übertragen kann. Die eindeutige Zuordnung kann beispielsweise dadurch erreicht werden, dass in der mobilen drahtlosen Kommunikationseinrichtung 20, vorzugsweise im Speicher 174, die IP-Adresse der Datenverwaltungseinrichtung 70 hinterlegt ist, und dass die Datenverwaltungseinrichtung 20 nur die mobile Kommunikationseinrichtung 20 eindeutig identifizieren kann.

Die Datenverwaltungseinrichtung 70 weist, wie Fig. 5 zeigt, ferner einen Programmspeicher 73 auf, in dem unter anderem Anweisungen enthalten sind, die der Mikroprozessor 74 zur Steuerung der Datenverwaltungseinrichtung 70 ausführen kann. In dem Programmspeicher 73 kann zum Beispiel ein Algorithmus hinterlegt sein, der bei Ausführung durch die Steuereinheit 74 dafür sorgt, dass unterschiedliche Kommunikationsaufträge zum Beispiel gemäß einer Prioritätenliste, d.h. in einer festgelegten Reihenfolge abgearbeitet werden können. So kann beispielsweise ein Kommunikationsauftrag, der Informationen zugeordnet ist, welche für die mobile drahtlose Kommunikationseinrichtung 20 bestimmt ist, in einer höheren Priorität abgearbeitet werden, als zum Beispiel ein Kommunikationsauftrag, der Informationen betrifft, welche von der Hardware-Sicherheitseinrichtung 170 der mobilen drahtlosen Kommunikationseinrichtung 20 zur Datenverwaltungseinrichtung 70 zu übertragen sind. Die Datenverwaltungseinrichtung 70 kann eine weitere Kommunikationsschnittstelle 75 aufweisen, die insbesondere zur Programmierung der Datenverwaltungseinrichtung 70 dient. Vorzugsweise können über die Kommunikationsschnittstelle 75 verschlüsselte Informationen in den Informationsspeicher 72 geschrieben werden, welche für die Hardware-Sicherheitseinrichtung 170 der mobilen drahtlosen Kommunikationseinrichtung 20 bestimmt sind.

Die mobile drahtlose Kommunikationseinrichtung 20 ist dazu ausgebildet, unter Ansprechen auf ein vorbestimmtes, sich wiederholendes Ereignis jeweils den Aufbau einer zeitlich begrenzten Kommunikationsverbindung über das wenigstens eine Kommunikationsnetzwerk 60 von der Hardware-Sicherheitseinrichtung 170 zur Datenverwaltungseinrichtung 70 einzuleiten und sich gegenüber der Datenverwaltungseinrichtung 70 zu identifizieren. Die Datenverwaltungseinrichtung 70 ist dazu ausgebildet, zu prüfen, ob ein Kommunikationsauftrag bezüglich der drahtlosen Kommunikationseinrichtung 20 bzw. der Hardware-Sicherheitseinrichtung 170 vorliegt. Wenn ein Kommunikationsauftrag vorliegt, Informationen zur Hardware-Sicherheitseinrichtung 170 der mobilen drahtlosen Kommunikationseinrichtung 20 zu übertragen, steuert der Mikroprozessor 74 der Datenverwaltungseinrichtung 70 die Abarbeitung des Kommunikationsauftrages nach erfolgreicher Identifizierung der drahtlosen Kommunikationseinrichtung 20, in dem Daten aus dem Informationsspeicher 72 ausgelesen und über die aufgebaute Kommunikationsverbindung gesichert übertragen werden.

Ein beispielhaftes vorbestimmtes, sich wiederholendes Ereignis kann hinsichtlich der Fig. 1 zum Beispiel ein von der mobilen drahtlosen Kommunikationseinrichtung 20 erfasster Zeitpunkt sein, zu dem die mobile drahtlose Kommunikationseinrichtung 20 in den Versorgungsbereich des drahtlosen stationären Zugangspunktes 40 eintritt. Sobald die mobile Kommunikationseinrichtung 20 in den Versorgungsbereich des stationäre Zugangspunktes 40 eingetreten ist, leitet die mobile drahtlose Kommunikationseinrichtung 20 unter Verwendung der IP-Adresse der Datenverwaltungseinrichtung 70 über den stationären Zugangspunkt 40 einen Verbindungsaufbau zur Datenverwaltungseinrichtung 70 ein und die Hardware-Sicherheitseinrichtung 170 identifiziert sich gegenüber der Datenverwaltungseinrichtung 70. Um eine gesicherte und automatisierte Kommunikation zwischen der Datenverwaltungseinrichtung 70 und der Hardware-Sicherheitseinrichtung 170 der mobilen sicheren Kommunikationseinrichtung zu ermöglichen, kann in der Hardware-Sicherheitseinrichtung 170 und in der Datenverwaltungseinrichtung 70 beispielsweise die IP-Security (IPsec)-Technologie in Verbindung e mit der Message-Authentication-Code-Technologie implementiert sein. Hierdurch ist es möglich, dass Informationen zwischen der Datenverwaltungseinrichtung 70 und der Hardware-Sicherheitseinrichtung 170 authentisch, integritätsgesichert und vertrauenswürdig im Sinne einer Ende-zu-Ende-Kommunikation ausgetauscht werden können.

Wie Fig. 1 weiter zeigt, enthält das beispielhafte Kommunikationssystem 10 eine weitere drahtlose Kommunikationseinrichtung, die im vorliegenden Beispiel als stationäre drahtlose Kommunikationseinrichtung 30 ausgebildet ist. Selbstverständlich können auch weitere stationäre Kommunikationseinrichtungen vorgesehen sein.

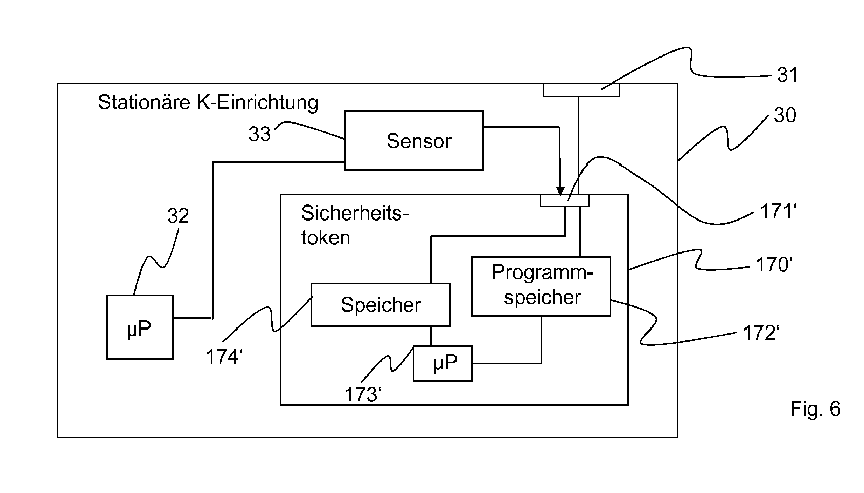

Die stationäre drahtlose Kommunikationseinrichtung 30, welche detaillierter in Fig. 6 dargestellt ist, kann einen Sensor 33 aufweisen, der beispielsweise in einer Laterne oder Ampel an einem Straßenrand fest installiert sein kann. Der Sensor 33 kann beispielsweise die Temperatur, die Verkehrsdichte oder andere Parameter erfassen. Ähnlich der mobilen drahtlosen Kommunikationseinrichtung 20 weist die stationäre drahtlose Kommunikationseinrichtung 30 ein Hardware-Sicherheitseinrichtung 170' auf, welche einen Speicher 174' eine Steuereinheit 173', die als Mikroprozessor ausgebildet sein kann, einen Programmspeicher 172' und eine Kommunikationsschnittstelle 171' auf, über die die Hardware-Sicherheitseinrichtung 170' mit der stationären drahtlosen Kommunikationseinrichtung 30 kommunizieren kann. Die Hardware-Sicherheitseinrichtung 170' kann in Aufbau und in der Funktionsweise der in Fig. 4 gezeigten Hardware-Sicherheitseinrichtung 170 der mobilen drahtlosen Kommunikationseinrichtung 20 entsprechen. Um Wiederholungen zu vermeiden, wird auf die dortige Erläuterung verwiesen.

Die stationäre drahtlose Kommunikationseinrichtung 30 weist, wie Fig. 5 zeigt, ferner eine drahtlose Kommunikationsschnittstelle 31 auf, die beispielsweise gemäß dem Bluetooth-Standard, dem NFC-Standard oder dem WLAN-Standard ausgebildet sein kann. Im vorliegenden Beispiel ist die drahtlose Kommunikationsschnittstelle 31 gemäß dem WLAN-Standard ausgebildet, um mit einem mobilen öffentlichen Zugangspunkt 50 drahtlos kommunizieren zu können. Der mobile öffentliche Zugangspunkt 50 kann beispielsweise in einem Fahrzeug implementiert sein. Über den mobilen öffentlichen Zugangspunkt 50 und das Mobilfunknetz 140 kann zum Beispiel die Hardware-Sicherheitseinrichtung 170' einen Zugang zum Internet 60 erhalten.

Beim gezeigten Ausführungsbeispiel gemäß Fig. 1 ist die stationäre drahtlose Kommunikationseinrichtung 30 eindeutig einer Datenverwaltungseinrichtung 80 zugeordnet, die entsprechend der Datenverwaltungseinrichtung 70 aufgebaut und betrieben werden kann. Das bedeutet, dass die Datenveraltungseinrichtung 80 eine Steuereinheit, einen Informationsspeicher, einen Programmspeicher sowie eine Kommunikationsschnittstelle zum Anbinden an das Internet 60 aufweist. Ähnlich der Datenverwaltungseinrichtung 70 kann die Datenverwaltungseinrichtung 80 eine weitere Kommunikationsschnittstelle aufweisen, die insbesondere zur Programmierung der Datenverwaltungseinrichtung 80 dient. Vorzugsweise können über diese Kommunikationsschnittstelle verschlüsselte Informationen in den Informationsspeicher geschrieben werden, welche für die Hardware-Sicherheitseinrichtung 170' der stationäre drahtlosen Kommunikationseinrichtung 30 bestimmt sind.

Die Hardware-Sicherheitseinrichtung 170' der stationäre drahtlose Kommunikationseinrichtung 30 ist dazu ausgebildet, unter Ansprechen auf ein vorbestimmtes, sich wiederholendes Ereignis jeweils den Aufbau einer zeitlich begrenzten Kommunikationsverbindung über den mobilen Zugangspunkt 50 das Mobilfunknetz 140, das Internet 160 zur Datenverwaltungseinrichtung 80 einzuleiten. Ein solches vorbestimmtes, sich gegebenenfalls wiederholendes Ereignis ist zum Beispiel der Zeitpunkt, zu dem ein Fahrzeug mit dem mobilen Zugangspunkt 50 an der stationären drahtlosen Kommunikationseinrichtung 30 vorbeifährt, sodass die stationäre drahtlose Kommunikationseinrichtung 30 in den Versorgungsbereich des mobilen Zugangspunktes 50 eintreten kann. Unter Ansprechen hierauf leitet dann die stationäre drahtlose Kommunikationseinrichtung 30 bzw. die Hardware-Sicherheitseinrichtung 170' unter Verwendung der IP-Adresse der Datenverwaltungseinrichtung 80, welche beispielsweise im Speicher 174' abgelegt ist, einen Verbindungsaufbau zur Datenverwaltungseinrichtung 80 ein. Anschließend kann sich die Hardware-Sicherheitseinrichtung 170' bzw. die stationäre drahtlose Kommunikationseinrichtung 30 gegenüber der Datenverwaltungseinrichtung 80 identifizieren. Ähnlich der Datenverwaltungseinrichtung 70 ist die Datenverwaltungseinrichtung 80 dazu ausgebildet, zu prüfen, ob ein Kommunikationsauftrag bezüglich der drahtlosen Kommunikationseinrichtung 30 vorliegt. Wenn ja, steuert sie nach erfolgreicher Identifizierung der drahtlosen Kommunikationseinrichtungen 30 die Abarbeitung des Kommunikationsauftrags, indem Daten aus dem Speicher 174' ausgelesen und über in die aufgebaute Kommunikationsverbindung zur Hardware-Sicherheitseinrichtung 170' gesichert übertragen werden.

Die Datenveraltungseinrichtungen 70 und 80 können jeweils prüfen, ob ein Kommunikationsauftrag während einer aufgebauten Kommunikationsverbindung vollständig abgearbeitet worden ist. Wenn nicht, wird die Abarbeitung des Kommunikationsauftrags während wenigstens einer weiteren, zwischen der Hardware-Sicherheitseinrichtung 170 und der Datenverwaltungseinrichtung 70 und/oder zwischen der Hardware-Sicherheitseinrichtung 170 und der Datenverwaltungseinrichtung 70 aufgebauten Kommunikationsverbindung fortgesetzt. Die Abarbeitung eines Kommunikationsauftrags kann unterbrochen werden, wenn zum Beispiel die Kommunikationsverbindung zwischen einer mobilen drahtlosen Kommunikationseinrichtung und der ihr zugeordneten Datenverwaltungseinrichtung abgebrochen wird, weil zum Beispiel die mobile drahtlose Kommunikationseinrichtung 20 sich aus dem Versorgungsbereich des stationäre Zugangspunktes 40 bewegt hat. Beispielsweise kann der Aufbau einer weiteren Kommunikationsverbindung zum Beispiel zwischen der Hardware-Sicherheitseinrichtung 170 und der Datenverwaltungseinrichtung 70 erfolgen, sobald die mobile drahtlose Kommunikationseinrichtung 20 wieder in den Versorgungsbereich eines stationären Zugangspunktes bewegt hat.

An dieser Stelle sei erwähnt, dass es sich bei dem stationären Zugangspunkt 40, von dem lediglich der einfachen Darstellung wegen nur ein einziger dargestellt ist, beispielsweise auch um eine NFC-Leseeinrichtung handeln kann, die über ein NFC-Hintergrundsystem einen Zugang zum Internet 60 bereitstellt. Die mobile drahtlose Kommunikationseinrichtung 20 kann in diesem Fall als Schlüssel ausgebildet sein und eine NFC-Schnittstelle 24 mit einem NFC-Chip aufweisen. Sobald die mobile drahtlose Kommunikationseinrichtung 20 in den Versorgungsbereich des stationären NFC-Zugangspunktes 40 gelangt, kann die mobile drahtlose Kommunikationseinrichtung 20 eine Verbindung über das Internet 60 zur Datenverwaltungseinrichtung 70 aufbauen.

Die Funktionsweise des Kommunikationssystems 10 wird weiter unten noch näher erläutert.

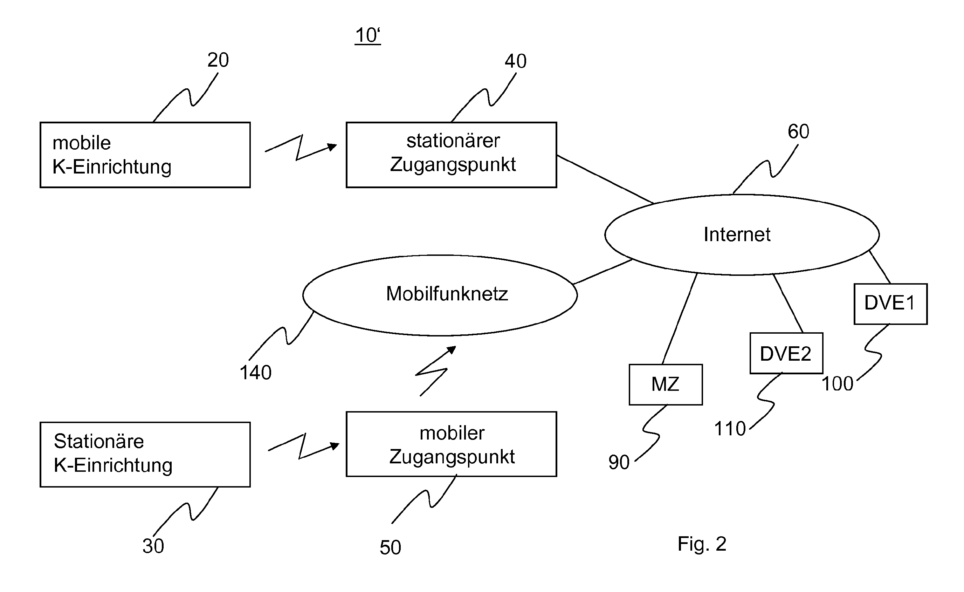

In Fig. 2 ist ein alternatives Kommunikationssystem 10' dargestellt, welches sich insbesondere von dem Fig. 1 dargestellten Kommunikationssystem 10 darin unterscheidet, dass eine zentrale Managementeinrichtung 90, hierin auch Managementzentrale MZ genannt, mit dem Internet 60 verbunden ist. Die in Fig. 2 gezeigte mobile Kommunikationseinrichtung 20, der stationäre Zugangspunkt 40, die stationäre drahtlose Kommunikationseinrichtung 30, der mobile Zugangspunkt 50, das Mobilfunknetz 140 und das Internet 60 entsprechen den jeweiligen Einrichtungen des in Fig. 1 gezeigten Kommunikationssystems 10. Ferner sind beispielhaft zwei Datenverwaltungseinrichtungen 100 und 110 mit dem Internet 60 verbunden. Die beiden Datenverwaltungseinrichtungen 100 und 110 unterscheiden sich von den Datenverwaltungseinrichtungen 70 und 80 dadurch, dass sie keine Identifizierung bzw. Authentifizierung mit der ihnen jeweils zugeordneten drahtlosen Kommunikationseinrichtung 30 bzw. 20 durchführen. Diese Aufgabe erledigt die zentrale Managementeinrichtung 90. Beim erläuterten Beispiel ist die mobile drahtlose Kommunikationseinrichtung 20 der Datenverwaltungseinrichtung 110 eindeutig zugeordnet, während die stationäre drahtlose Kommunikationseinrichtung 30 der Datenverwaltungseinrichtung 100 eindeutig zugeordnet ist.

Im Unterschied zum Kommunikationssystem 10 sind im Speicher 174 der Hardware-Sicherheitseinrichtung 170 und im Speicher 174' der Hardware-Sicherheitseinrichtung 170' jeweils die IP-Adresse der zentralen Managementeinrichtung 90 hinterlegt. In der zentralen Managementeinrichtung 90 kann wiederum eine Zuordnungstabelle hinterlegt sein, welche die IP-Adresse der Datenverwaltungseinrichtung 100, die IP-Adresse der Datenverwaltungseinrichtung 110 sowie eine eindeutige Kennung der Hardware-Sicherheitseinrichtung 170 und der Hardwareeinrichtung 170 und gegebenenfalls eine Adresse des stationären Zugangspunktes 40 und eine Adresse des mobilen Zugangspunktes 50 enthält, um auf diese Weise eine eindeutige Zuordnung von der mobilen drahtlosen Kommunikationseinrichtung 20 zur Datenverwaltungseinrichtung 110 und von der stationären drahtlosen Kommunikationseinrichtung 30 zur Datenverwaltungseinrichtung 100 herstellen zu können.

Die drahtlose Kommunikationseinrichtung 20 ist dazu ausgebildet, unter Ansprechen auf ein vorbestimmtes, sich wiederholendes Ereignis und unter Verwendung der IP-Adresse der zentralen Managementeinrichtung 90 den Aufbau einer Kommunikationsverbindung über den stationären Zugangspunkt 40 und das Kommunikationsnetzwerk 60 zur zentralen Managementeinrichtung 90 einzuleiten und sich dann gegenüber der zentralen Managementeinrichtung zu identifizieren. Die zentrale Managementeinrichtung 90 ist dazu ausgebildet, nach einer erfolgreichen Identifizierung der mobilen drahtlosen Kommunikationseinrichtung 20 den Aufbau einer zeitlich begrenzten Kommunikationsverbindung zwischen der Hardware-Sicherheitseinrichtung 170 der drahtlosen Kommunikationseinrichtung 20 und der Datenverwaltungseinrichtung 110, welche eindeutig der mobilen drahtlosen Kommunikationseinrichtung 20 zugeordnet ist, über den stationären Zugangspunkt und das Internet 60 zu steuern. Die Datenverwaltungseinrichtung 110 ist dazu ausgebildet, zu prüfen, ob ein Kommunikationsauftrag bezüglich der mobilen drahtlosen Kommunikationseinrichtung 20 vorliegt. Wenn ja, steuert sie die Abarbeitung des Kommunikationsauftrags, indem eine im Speicher 174 für die Hardware-Einrichtung 170 gespeicherte Information über die aufgebaute Kommunikationsverbindung gesichert zur Hardware-Sicherheitseinrichtung 170 übertragen werden. Eine gesicherte Übertragung bedeutet wiederum, dass die Information zwischen der Hardware-Sicherheitseinrichtung 170 der mobile drahtlosen Kommunikationseinrichtung 20 und der Datenverwaltungseinrichtung 110 authentisch, integritätsgesichert und vertraulich über die gesamte Kommunikationsstrecke hinweg übertragen werden.

Informationen für die Hardware-Sicherheitseinrichtung 170 der mobilen drahtlosen Kommunikationseinrichtung 20 sind in einem Informationsspeicher der Datenverwaltungseinrichtung 110 vorzugsweise verschlüsselt hinterlegt, während Informationen für die Hardware-Sicherheitseinrichtung 170' der stationäre drahtlose Kommunikationseinrichtung 30 in einem Informationsspeicher der Datenverwaltungseinrichtung 100 vorzugsweise verschlüsselt hinterlegt sind.

Wie bereits hinsichtlich des Kommunikationssystems 10 erläutert, kann es sich bei dem vorbestimmten, sich wiederholenden Ereignis um den beziehungsweise die Zeitpunkte handeln, zu denen die mobile drahtlose Kommunikationseinrichtung 20 in den Versorgungsbereich des stationäre Zugangspunktes 40 oder eines anderen, nicht dargestellten stationären Zugangspunktes eintritt.

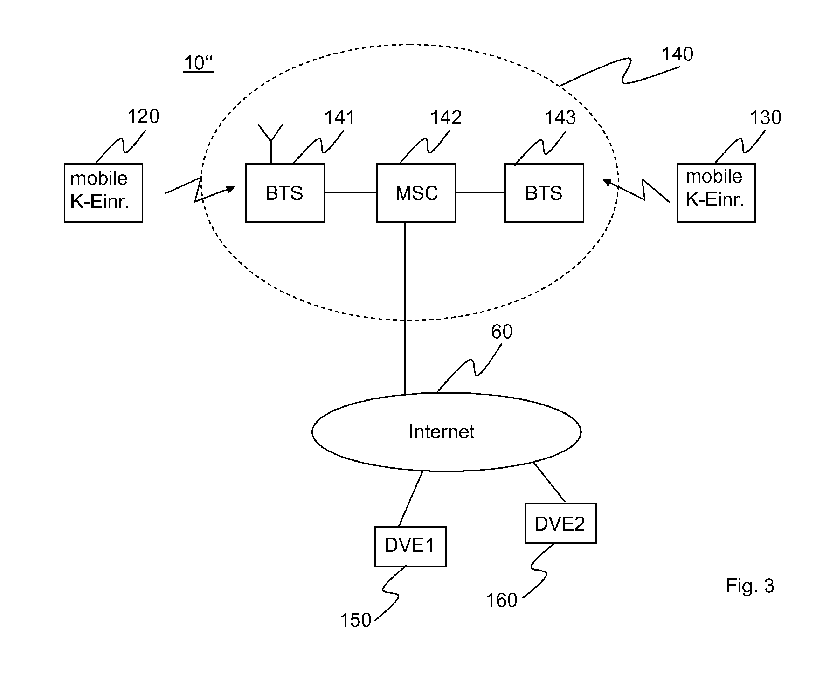

Fig. 3 zeigt ein weiteres beispielhaftes Kommunikationssystem 10", bei dem beispielsweise zwei drahtlose Kommunikationseinrichtungen 120 und 130 direkt, das heißt ohne Zwischenschaltung von Zugangspunkten, über das Mobilfunknetz 140 und das Internet 60 mit einer Datenverwaltungseinrichtung 150 bzw. 160 kommunizieren können. Angemerkt sei, dass die gezeigten beispielhaften Kommunikationssysteme 10, 10' und 10" jeweils für sich, aber auch kombiniert betrieben werden können. Dieser Sachverhalt wird insbesondere durch die Verwendung identischer Bezugszeichen für die beiden Kommunikationsnetzwerke 60 und 140 angedeutet.

Das in den erläuterten Kommunikationssystemen 10, 10', 10" und 10"' beispielhaft verwendete Mobilfunknetz 140 ist schematisch durch zwei Base-Transceiver-Systeme 141 und 143, kurz BTS genannt, sowie eine Mobile-Service-Switching-Center 142, kurz MSC genannt, dargestellt. In an sich bekannter Weise kann über den Mobile Service-Switching-Center 142 eine Verbindung zum Internet 60 hergestellt werden. Angemerkt sei, dass die beiden mobilen drahtlosen Kommunikationseinrichtungen 120 und 130 in Aufbau und Funktionsweise der in Fig. 4 gezeigten mobilen drahtlosen Kommunikationseinrichtung 20 entsprechen können. Die in Fig. 4 mit 21 bezeichnete drahtlose Kommunikationsschnittstelle wird hierbei verwendet, um über das Mobilfunknetz 140 kommunizieren zu können. Wiederum sei angemerkt, dass lediglich der einfachen Darstellung wegen nur zwei mobile drahtlose Kommunikationseinrichtungen 120 und 130 und zwei Datenverwaltungseinrichtungen 150 und 160 dargestellt sind. Im vorliegenden Beispiel sei angenommen, dass die mobile drahtlose Kommunikationseinrichtung 120 eindeutig der Datenverwaltungseinrichtung 150 zugeordnet ist, während die mobile drahtlose Kommunikationseinrichtung 130 eindeutig der Datenverwaltungseinrichtung 160 zugeordnet ist.

Die beiden mobilen drahtlosen Kommunikationseinrichtungen 120 und 130 sind jeweils dazu ausgebildet, unter Ansprechen auf ein vorbestimmtes, sich wiederholendes Ereignis, jeweils den Aufbau einer zeitlich begrenzten Kommunikationsverbindung über das Mobilfunknetz 140 und das Internet 60 zur Datenverwaltungseinrichtung 150 beziehungsweise zur Datenverwaltungseinrichtung 160 einzuleiten und sich jeweils gegenüber der Datenverwaltungseinrichtung 150 beziehungsweise 160 zu identifizieren. Bei dem vorbestimmten, sich wiederholenden Ereignis kann es sich beispielsweise um einen zeitlichen Trigger handeln, der zum Beispiel vom Mikroprozessor der Hardware-Sicherheitseinrichtung der mobilen Kommunikationseinrichtung 120 bzw. 130 ausgelöst wird. Zeitlich begrenzt wird eine aufgebaute Kommunikationsverbindung beispielsweise dadurch, dass Mikroprozessor gesteuert von der jeweiligen Hardware-Sicherheitseinrichtung die Verbindung nach Ablauf einer festen Zeitspanne oder einer zufällig gewählten Zeitspanne beendet wird.

Die Datenverwaltungseinrichtungen 150 und 160 sind jeweils dazu ausbildet, zu prüfen, ob ein Kommunikationsauftrag bezüglich der drahtlosen Kommunikationseinrichtung 120 beziehungsweise 130 vorliegt. Wenn ja, wird der Kommunikationsauftrag nach erfolgreicher Identifizierung der drahtlosen Kommunikationseinrichtung 120 beziehungsweise 130 durch die jeweilige Datenverwaltungseinrichtung 150 bzw. 16ß gesteuert, indem eine Information gesichert und gezielt über die jeweilige aufgebaute Kommunikationsverbindung zur Hardware-Sicherheitseinrichtung der mobilen drahtlosen Kommunikationseinrichtung 120 beziehungsweise 130 übertragen wird.

Die Datenverwaltungseinrichtungen 150 und 160 sind jeweils dazu ausgebildet, zu prüfen, ob der Kommunikationsauftrag während einer aufgebauten sicheren Kommunikationsverbindung vorständig abgearbeitet worden ist. Wenn nicht, wird die Abarbeitung des jeweiligen Kommunikationsauftrags während wenigstens einer weiteren, zwischen der jeweiligen Hardware-Sicherheitseinrichtung der drahtlosen Kommunikationseinrichtung 120 bzw. 130 und der Datenverwaltungseinrichtung 150 beziehungsweise 160 aufgebauten Verbindung fortgesetzt.

An dieser Stelle sei angemerkt, dass die Hardware-Sicherheitseinrichtung 170 der mobilen drahtlosen Kommunikationseinrichtungen 20, 120 und 130 und die Hardware-Sicherheitseinrichtung 170' der stationäre mobilen Kommunikationseinrichtung 30 jeweils dazu ausgebildet sind, eine Statusinformation vorzugweise zu Beginn, d.h. unmittelbar nach Aufbau einer Kommunikationsverbindung zur jeweiligen eindeutig zugeordneten Datenverwaltungseinrichtung, zu übertragen, die anzeigt, dass ein Information noch nicht vollständig übertragen worden ist. Alternativ oder zusätzlich kann die Statusinformation sind anzeigen, an welcher Stelle die Informationsübertragung zuvor beendet worden ist. Darüber hinaus kann jede Hardware-Sicherheitseinrichtung eine Statusinformation zur jeweiligen Datenverwaltungseinrichtung übertragen, die signalisiert, dass ein Kommunikationsauftrag vollständig abgearbeitet, d.h., die zum Kommunikationsauftrag gehörende Information vollständig empfangen und gegebenenfalls verarbeitet worden ist.

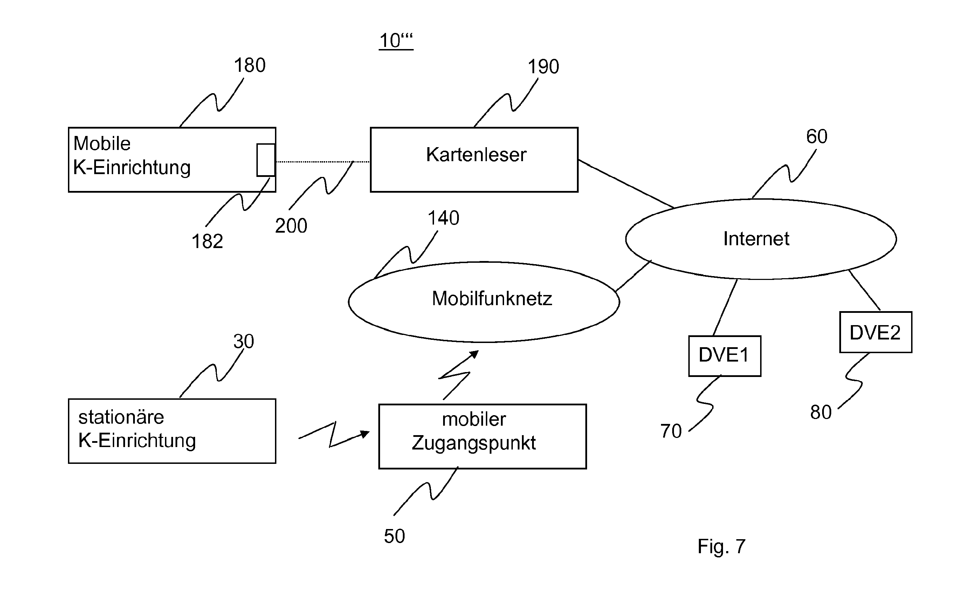

In Fig. 7 ist ein weiteres beispielhaftes Kommunikationssystem 10"' zur gesicherten und automatisierten Kommunikation zwischen einer Datenverwaltungseinrichtung und einer Hardware-Sicherheitseinrichtung einer Kommunikationseinrichtung ausschnittsweise dargestellt. Das Kommunikationssystem 10"' unterscheidet sich vom in Fig. 1 gezeigten Kommunikationssystem 10 nur dadurch, dass anstelle der mobilen drahtlosen Kommunikationseinrichtung 20 eine mobile kontaktbehaftete Kommunikationseinrichtung 180, und anstelle des stationären drahtlosen Zugangspunkts 40 ein kontaktbehaftete Einrichtung, z.B. ein kontaktbehafteter Kartenleser 190 zum Einsatz kommen. Die mobile kontaktbehaftete Kommunikationseinrichtung 180, welche zum Beispiel eine Chipkarte sein kann, ist eindeutig der Datenverwaltungseinrichtung 70 zugeordnet. Anstelle der drahtlosen Kommunikationsschnittstelle 21 der mobilen drahtlosen Kommunikationseinrichtung 20 weist die mobile kontaktbehaftete Kommunikationseinrichtung 180 eine kontaktbehaftete Kommunikationsschnittstelle 182 zur kontaktbehafteten Kommunikation mit dem Kartenleser 190 auf. Die kontaktbehaftete Kommunikation ist durch die gepunktete Linie 200 symbolisiert. Im Übrigen entspricht der Aufbau und die Funktionsweise der kontaktbehafteten Kommunikationseinrichtung 180 im Wesentlichen dem Aufbau und der Funktionsweise der mobilen drahtlosen Kommunikationseinrichtung 20, wie sie in Fig. 4 dargestellt ist. Das heißt: Die kontaktbehaftete Kommunikationseinrichtung 180 kann wie die mobile drahtlose Kommunikationseinrichtung 20 eine Ein- und/oder Ausgabeeinrichtung, eine Steuereinheit, die die Funktion der kontaktbehafteten Kommunikationseinrichtung 180 steuert, und eine Hardware-Sicherheitseinrichtung mit einem Speicher, einem Programmspeicher und einer Steuereinheit aufweisen. Angemerkt sei, dass der Kartenleser 190 auch eine drahtlose Kommunikationsschnittstelle zur Kommunikation mit einer mobilen drahtlosen Kommunikationseinrichtung, wie zum Beispiel der Kommunikationseinrichtung 20, aufweisen kann.

Die kontaktbehaftete Kommunikationseinrichtung 180 ist dazu ausgebildet, eine elektrische Verbindung bzw. eine elektrische Kontaktierung mit der kontaktbehafteten Kartenleseeinrichtung 190 zu erfassen und unter Ansprechen hierauf den Aufbau einer Kommunikationsverbindung über die kontaktbehaftete Kartenleseeinrichtung 190 zur Datenverwaltungseinrichtung 70 einzuleiten.

Wird die kontaktbehaftete Kommunikationseinrichtung 180 von der kontaktbehafteten Kartenleseeinrichtung 190 elektrisch getrennt, wird eine zwischen der Hardware-Sicherheitseinrichtung der kontaktbehafteten Kommunikationseinrichtung 180 und der Datenverwaltungseinrichtung 70 bestehende Kommunikationsverbindung abgebrochen. Sobald die kontaktbehaftete Kommunikationseinrichtung 180 mit der Kartenleseeinrichtung 190 oder einer anderen geeigneten kontaktbehafteten Einrichtung, welche mit dem Internet 60 verbunden ist, elektrisch wieder verbunden wird, kann erneut eine Kommunikationsverbindung zwischen der Hardware-Sicherheitseinrichtung der kontaktbehafteten Kommunikationseinrichtung 180 und der Datenverwaltungseinrichtung 70 aufgebaut werden, um einen neuen Kommunikationsauftrag gesichert abzuwickeln oder einen noch nicht beendeten Kommunikationsauftrag fortzusetzen. Dieses Verfahren wird weiter unten in Verbindung mit dem in Fig. 1 gezeigten Kommunikationssystem noch näher erläutert.

Werden in Fig. 2 zum Beispiel die mobile kontaktbehaftete Kommunikationseinrichtung 180 und wenigstens die eine Kartenleseeinrichtung 190 eingesetzt, so kann die kontaktbehaftete Kommunikationseinrichtung 180 dazu ausgebildet sein, eine elektrische Verbindung bzw. eine elektrische Kontaktierung mit der kontaktbehafteten Kartenleseeinrichtung 190 zu erfassen und unter Ansprechen hierauf den Aufbau einer Kommunikationsverbindung über die kontaktbehaftete Kartenleseeinrichtung 190 zu einer ihr eindeutig zugeordneten Datenverwaltungseinrichtung oder zur zentralen Managementeinrichtung 90 einzuleiten.

Angemerkt sei, dass als stationäre drahtlose Kommunikationseinrichtung 30 auch eine stationäre kontaktbehaftete Kommunikationseinrichtung mit einer Hardware-Sicherheitseinrichtung verwendet werden kann, die zum Beispiel über eine mobile kontaktbehaftete Leseeinrichtung, welche über das Mobilfunknetz 140 mit dem Internet 60 verbunden werden kann, mit der Datenverwaltungseinrichtung 80 gesichert kommunizieren kann.

Angemerkt sei, dass die beispielhaft dargestellten Kommunikationssysteme 10, 10', 10" und 10"' in beliebiger Weise kombiniert werden können. Mit anderen Worten ausgedrückt: Die Kommunikationssysteme können mehrere mobile drahtlose Kommunikationseinrichtungen 20, und/oder mehrere stationäre drahtlose Kommunikationseinrichtungen 30, und/oder mehrere mobile kontaktbehaftete Kommunikationseinrichtungen 180, und/oder mehrere stationäre kontaktbehaftete Kommunikationseinrichtungen, und/oder mehrere drahtlose stationäre Zugangspunkte 40, und/oder mehrere mobile drahtlose Zugangspunkte 50, und/oder mehrere stationäre kontaktbehaftete Einrichtungen 190, und/oder mehrere mobile kontaktbehaftete Einrichtungen und/oder wenigstens die eine zentrale Managementeinrichtung 90 aufweisen.

Nachfolgend wird die Funktionsweise des in Fig. 1 gezeigten Kommunikationssystem 10 näher erläutert. Die nachfolgende Funktionsbeschreibung trifft auch auf das in Fig. 7 gezeigte Kommunikationssystem 10"' zu, wenn die mobile drahtlose Kommunikationseinrichtung 20 durch die mobile kontaktbehaftete Kommunikationseinrichtung 180 und der drahtlose stationäre Zugangspunkt 40 durch den vorzugsweise stationären kontaktbehafteten Kartenleser 190 ersetzt werden.

Angenommen sei beispielsweise, dass im Speicher 174 der Hardware-Sicherheitseinrichtung 170 und im Speicher 174' der Hardware-Sicherheitseinrichtung 170' jeweils ein kryptografischer Schlüssel hinterlegt ist, mit dem die jeweilige Hardware-Sicherheitseinrichtung zu übertragende Informationen verschlüsseln kann. Um sicherzustellen, dass verschlüsselte Informationen nicht abgehört werden können, kann vorgesehen sein, dass die kryptografischen Schlüssel zu bestimmten Zeitpunkten ausgetauscht werden.

Angenommen sei ferner, dass über die Kommunikationsschnittstelle 75 ein Administrator in den Informationsspeicher 72 der Datenverwaltungseinrichtung 70 einen neuen kryptografischen Schlüssel für die Hardware-Sicherheitseinrichtung 170 der mobile drahtlose Kommunikationseinrichtung 20 verschlüsselt hinterlegt hat, was durch einen entsprechenden Kommunikationsauftrag der Datenverwaltungseinrichtung 70 signalisiert wird. In ähnlicher Weise ist im Informationsspeicher der Datenverwaltungseinrichtung 80 ebenfalls ein neuer kryptografischer Schlüssel für die mobile drahtlose Kommunikationseinrichtung 30 verschlüsselt hinterlegt worden. Der jeweilige dazugehörende Kommunikationsauftrag definert beispielsweise, dass der im jeweiligen Informationsspeicher hinterlegte kryptografische Schlüssel zur mobilen drahtlosen Kommunikationseinrichtung 20 bzw. zur stationären drahtlosen Kommunikationseinrichtung 30 übertragen werden soll und dass der alte Schlüssel durch den neuen Schlüssel ersetzen soll.

Weiterhin sei angenommen, dass die mobile drahtlose Kommunikationseinrichtung 20 gerade in den Versorgungsbereich des stationären Zugangspunktes 40 eingetreten ist, während die stationäre drahtlose Kommunikationseinrichtung 30 in den Versorgungsbereich des mobilen Zugangspunktes 50 eingetreten ist.

Unter Ansprechen auf den Eintritt in den Versorgungsbereich des stationären Zugangspunktes 40 leitet die Hardware-Sicherheitseinrichtung 170 der mobilen Kommunikationseinrichtung 20 den Aufbau einer Kommunikationsverbindung zur Datenverwaltungseinrichtung 70 über wenigsten ein Kommunikationsnetzwerk, im vorliegenden Beispiel über das Internet 60 und den stationären Zugangspunkt 40 für ein Zeitintervall begrenzte Länge ein.

Hierzu kann die mobile drahtlose Kommunikationseinrichtung 20 die IP-Adresse der Datenverwaltungseinrichtung 70 verwenden.

In ähnlicher Weise wird eine Kommunikationsverbindung zwischen der Datenverwaltungseinrichtung 80 und der Hardware-Sicherheitseinrichtung 170' der stationären drahtlosen Kommunikationseinrichtung über wenigstens ein Kommunikationsnetzwerk, im vorliegenden Beispiel über den mobilen Zugangspunkt 50, das Mobilfunknetz 140 und das Internet 60 für ein Zeitintervall begrenzte Länge aufgebaut.

Unter Verwendung einer eindeutigen elektronischen Identifikation identifiziert sich nunmehr die mobile drahtlose Kommunikationseinrichtung 20 bzw. die Hardware-Sicherheitseinrichtung 170 gegenüber der Datenverwaltungseinrichtung 70, während sich die stationäre drahtlose Kommunikationseinrichtung 30 bzw. die Hardware-Sicherheitseinrichtung 170' gegenüber der Datenverwaltungseinrichtung 80 identifiziert. Hierzu können an sich bekannte Authentisierungsverfahren Anwendung finden. Insbesondere sind die Hardware-Sicherheitseinrichtungen 170 und 170' der drahtlosen Kommunikationseinrichtung 20 bzw. 30 und die Datenverwaltungseinrichtungen 70 und 80 dazu ausgebildet, vorzugsweise mit der IP-Security-Technologie und der Message-Authentification-Code-Technologie eine gesicherte Kommunikation zwischen der Hardware-Sicherheitseinrichtung 170 der mobilen drahtlosen Kommunikationseinrichtung 20 und der Datenverwaltungseinrichtung 70 sowie der Hardwaresicherheitseinrichtung 170' der stationären drahtlosen Kommunikationseinrichtung 30 und der Datenverwaltungseinrichtung 80 zu ermöglichen, um Informationen authentisch, integritätsgesichert und vertraulich übertragen zu können. Die Identifizierung der drahtlosen Kommunikationseinrichtung 20 und 30 mit den ihnen eindeutig geordneten Datenverwaltungseinrichtungen 70 und 80 erfolgt zweckmäßigerweise über die zuvor aufgebaute Kommunikationsverbindungen.

In den Datenverwaltungseinrichtungen 70 und 80 wird jeweils geprüft, ob ein Kommunikationsauftrag bezüglich der drahtlosen Kommunikationseinrichtung 20 beziehungsweise der drahtlosen Kommunikationseinrichtung 30 vorliegt. Im vorliegenden Beispiel liegt jeweils ein Kommunikationsauftrag vor, nämlich den im Informationsspeicher 72 gespeicherten Schlüssel zur Hardware-Sicherheitseinrichtung 170 der mobilen drahtlosen Einrichtung 20 zu übertragen und den alten Schlüssel auszutauschen sowie den in der Datenverwaltungseinrichtung hinterlegten kryptografischen Schlüssel zur Hardware-Sicherheitseinrichtung 170' der stationären drahtlosen Kommunikationseinrichtung 30 zu übertragen und den alten Schlüssel auszutauschen. Die Datenverwaltungseinrichtung 70 steuert dann nach erfolgreicher Identifizierung der mobilen drahtlosen Kommunikationseinrichtung 20 die Abarbeitung des Kommunikationsauftrag, indem der neue kryptografische Schlüssel aus dem Speicher 72 ausgelesen und über die aufgebaute Kommunikationsverbindung gesichert zur Hardware-Sicherheitseinrichtung 170 übertragen wird. In ähnlicher Weise wird der im Speicher 72' der Datenverwaltungseinrichtung 80 gespeicherte neue kryptografische Schlüssel ausgelesen und über die aufgebaute Kommunikationsverbindung gesichert zur Hardware-Sicherheitseinrichtung 170' übertragen.

In den Datenverwaltungseinrichtungen 70 und 80 wird nunmehr jeweils geprüft, ob der jeweilige Kommunikationsauftrag während der abgebauten Kommunikationsverbindung vollständig abgearbeitet worden ist. Stellt sich heraus, dass die Kommunikationsverbindungen vorher abgebrochen worden sind, warten die Datenverwaltungseinrichtungen 70 und 80 jeweils darauf, dass erneut eine Kommunikationsverbindung von der mobilen drahtlosen Kommunikationseinrichtung 20 beziehungsweise von der stationären drahtlosen Kommunikationseinrichtung 30 aufgebaut wird. Sobald die mobile drahtlose Kommunikationseinrichtung 20 und die stationär drahtlose Kommunikationseinrichtung 30 wieder in den Versorgungsbereich eines stationären Zugangspunktes beziehungsweise eines mobilen Zugangspunktes gelangen, wiederholt sich das zuvor beschriebene Verfahren. Zweckmäßigerweise wird nach erneutem Aufbau einer Kommunikationsverbindung die Hardware-Sicherheitseinrichtung 170 und die Hardware-Sicherheitseinrichtung 170' der Datenverwaltungseinrichtung 70 beziehungsweise der Datenverwaltungseinrichtung 80 eine Statusinformation übertragen, welche signalisiert, an welcher Stelle die Abarbeitung des Kommunikationsauftrages abgebrochen beziehungsweise welche Daten zuletzt übertragen worden sind. Auf diese Weise sind die Datenverwaltungseinrichtungen 70 und 80 jeweils in der Lage, die noch nicht von der mobilen Kommunikationseinrichtung 20 und der stationären Kommunikationseinrichtung 30 empfangenen Daten zur Hardware-Sicherheitseinrichtung 170 der mobilen drahtlosen Kommunikationseinrichtung 20 beziehungsweise zur Hardware-Sicherheitseinrichtung 170' der stationären Kommunikationseinrichtung 30 zu übertragen.

Sobald alle Daten des jeweiligen Kommunikationsauftrages von der jeweiligen Hardware-Sicherheitseinrichtung 170 beziehungsweise 171 empfangen worden sind, wird von der jeweiligen Hardware-Sicherheitseinrichtung eine entsprechende Statusinformation an die Datenverwaltungseinrichtung 70 beziehungsweise an die Datenverwaltungseinrichtung 80 übertragen, welche signalisiert, dass alle Daten empfangen worden sind, das heißt, dass der jeweilige Kommunikationsauftrag vollständig abgearbeitet worden ist.

Denkbar ist in diesem Fall, dass die Datenverwaltungseinrichtungen 70 und 80 jeweils nach vollständiger Abarbeitung eines Kommunikationsauftrages ein entsprechendes Schlusssignal zur jeweiligen Hardware-Sicherheitseinrichtung übertragen, anhand dessen die jeweilige Hardware-Sicherheitseinrichtung den vollständigen Empfang einer Information erkennen kann.

Hat beispielsweise die Datenverwaltungseinrichtung 70 erkannt, dass ein Kommunikationsauftrag vollständig abgearbeitet worden ist, das heißt, dass alle Daten, die den kryptografischen Schlüssel darstellen, von der Hardware-Sicherheitseinrichtung 170 vollständig empfangen worden sind, kann die Datenverwaltungseinrichtung 70 die Kommunikationsverbindung beenden, bevor die mobile drahtlose Kommunikationseinrichtung 20 den Versorgungsbereich des stationären Zugangspunktes wieder verlässt.

Dank dieses Verfahrens ist es möglich, auch während Kommunikationsverbindungen, die zeitlich sehr kurz sind, beispielsweise wenige Sekunden oder noch kürzer, sicherheitsrelevante Daten von der Datenverwaltungseinrichtung 70 zur Hardware-Sicherheitseinrichtung 170 und/oder von der Datenverwaltungseinrichtung 80 zur Hardware-Sicherheitseinrichtung 170' gesichert zu übertragen.

Nunmehr sei der Fall angenommen, dass im Informationsspeicher 72 der Datenverwaltungseinrichtung 70 verschiedene Informationen beziehungsweise Informationstypen hinterlegt sind, die durch einen entsprechenden Kommunikationsauftrag festgelegt werden.

Beispielsweise sei angenommen, dass im Informationsspeicher 72 ein Sicherheitsupdate für eine im Programmspeicher 172 der Hardware-Sicherheitseinrichtung 170 gespeicherte Sicherheitssoftware, eine Kurznachricht und eine spezielle Steuerungsinformation verschlüsselt hinterlegt sind. Die verschiedenen Informationstypen können vom Administrator mit einer entsprechenden Kennung versehen sein, anhand derer der Mikroprozessor 74 der Datenverarbeitungseinrichtung 70 erkennen kann, in welcher Reihenfolge die jeweiligen Informationen zur Hardware-Sicherheitseinrichtung 170 übertragen werden müssen. Mit anderen Worten: Die Datenverwaltungseinrichtung 70 kann selbsttätig eine Priorisierung der zu übertragenden Informationen vornehmen. Im vorliegenden Beispiel sei angenommen, dass das Sicherheitsupdate die höchste Priorität hat, gefolgt von der Steuerungsinformation und der Kurznachricht. Weiterhin sei angenommen, dass im Speicher 174 der Hardware-Sicherheitseinrichtung 170 eine Information für die Datenverwaltungseinrichtung 70 gespeichert ist.

Nachdem erstmalig in der zuvor beschriebenen Art und Weise eine Kommunikationsverbindung zwischen der Hardware-Sicherheitseinrichtung 170 der mobilen drahtlosen Kommunikationseinrichtung 20 und der Datenverwaltungseinrichtung 70 aufgebaut worden ist und die mobile drahtlose Kommunikationseinrichtung 20 sich gegenüber der Datenverwaltungseinrichtung 70 identifiziert hat, prüft die Datenverwaltungseinrichtung 70, ob abzuarbeitende Kommunikationsaufträge vorliegen. Da auch die mobile drahtlose Kommunikationsverbindung 20 nunmehr Informationen für die Datenverwaltungseinrichtung 70 zur Verfügung hat, sendet sie einen entsprechenden Kommunikationsauftrag zur Datenverwaltungseinrichtung 70, die diesem Kommunikationsauftrag beispielsweise die niedrigste Priorität zuordnet. Nunmehr beginnt die Datenverwaltungseinrichtung 70 mit der Abarbeitung des Kommunikationsauftrages, welcher die höchste Priorität hat.

Das zuvor beschriebene Verfahren, das heißt, das gegebenenfalls wiederholte Aufbauen von Kommunikationsverbindungen und Identifizieren der mobilen sicheren Kommunikationseinrichtung 20 gegenüber der Datenverwaltungseinrichtung 70 sowie das anschließende Übertragen der zu dem jeweiligen Kommunikationsauftrag gehörenden Information in authentischer, integritätsgesicherter und vertraulicher Weise wird solange wiederholt, bis alle Kommunikationsaufträge vollständig abgearbeitet worden sind.

Auf diese Weise wird sichergestellt, dass Informationen sowohl von der Hardware-Sicherheitseinrichtung 170 der mobilen drahtlosen Kommunikationseinrichtung 20 zur Datenverwaltungseinrichtung 70 als auch in umgekehrter Richtung von der Datenverwaltungseinrichtung 70 zur Hardware-Sicherheitseinrichtung 170 mittels einer authentischen, integritätsgesicherten und vertrauenswürdigen Ende-zu-Ende-Kommunikation vollständig übertragen werden.

Die Funktionsweise des in Fig. 3 gezeigten Kommunikationssystems entspricht im Wesentlichen der Funktionsweise des in Fig. 1 gerade beschriebenen Kommunikationssystems, wobei in diesem Fall die mobilen drahtlosen Kommunikationseinrichtungen 120 und 130 direkt, das heißt ohne Zwischenschaltung von Zugangspunkten, über das Mobilfunknetz 140 und das Internet zu der jeweiligen Datenverwaltungseinrichtung 150 und 160 erfolgt. Der Vollständigkeit halber sei erwähnt, dass auch das in Fig. 3 gezeigte Kommunikationssystem eine zentrale Managementeinrichtung aufweisen kann, die ähnlich der zentralen Managementeinrichtung 90 des Kommunikationssystems 10' funktioniert.

Die Funktionsweise des in Fig. 3 gezeigten Kommunikationssystems 10" ähnelt der Funktionsweise des Kommunikationssystems 10. Allerdings bauen die mobilen Kommunikationseinrichtungen 120 und 130 nicht indirekt über stationäre Zugangspunkte, sondern unmittelbar, d.h. ohne Zwischenschaltung von stationären Zugangspunkten, Kommunikationsverbindungen über das Mobilfunknetz 140 und das Internet 60 zur Datenverwaltungseinrichtung 150 bzw. 160 auf und tauschen hierüber gesichert Informationen in der zuvor beschriebenen Weise aus.

Die Funktionsweise des in Fig. 2 gezeigten Kommunikationssystems 10 wird nachfolgend anhand eines Ausführungsbeispiels erläutert.

Wie im weiter oben erläuterten Beispiel sei angenommen, dass in der Datenverwaltungseinrichtung 110 ein neuer kryptografischer Schlüssel für die mobile Hardware-Sicherheitseinrichtung 170 der drahtlosen Kommunikationseinrichtung 20 zur Verfügung steht.

Angenommen sei wiederum, dass die mobile drahtlose Kommunikationseinrichtung 20 gerade in den Versorgungsbereich des stationären Zugangspunktes 40 eingetreten ist. Unter Ansprechen hierauf wird eine Kommunikationsverbindung zwischen der zentralen Managementeinrichtung 90 und der Hardware-Sicherheitseinrichtung 170 der mobilen drahtlosen Kommunikationseinrichtung 20 über wenigstens ein Kommunikationsnetzwerk, im vorliegenden Beispiel über den stationären Zugangspunkt 40 und das Internet 60 aufgebaut. Hierzu verwendet die mobile drahtlose Kommunikationseinrichtung 20 die im Speicher 174 hinterlegte IP-Adresse der zentralen Managementeinrichtung verwendet. Anschließend identifiziert sich die mobile drahtlose Kommunikationsschnittstelle 20 mittels der in der Hardware-Sicherheitseinrichtung 170 hinterlegten elektronischen eindeutigen Kennung gegenüber der zentralen Managementeinrichtung 90.

Nach einer erfolgreichen Identifizierung erkennt die zentrale Managementeinrichtung 90, dass die mobile Kommunikationseinrichtung 20 eindeutig der Datenverwaltungseinrichtung 110 zugeordnet ist. Unter Ansprechen hierauf steuert die zentrale Managementeinrichtung 90 den Aufbau einer Kommunikationsverbindung zwischen der Datenverwaltungseinrichtung 110 und der Hardware-Sicherheitseinrichtung 170 der mobilen drahtlosen Kommunikationseinrichtung 20 über den stationären Zugangspunkt 40 und das Internet 60. Die Kommunikationsverbindung besteht während eines Zeitintervalls begrenzter Länge, das heißt beispielsweise solange, wie sich die mobile drahtlose Kommunikationseinrichtung 20 im Versorgungsbereich des stationären Zugangspunktes 40 aufhält. Nunmehr prüft die Datenverwaltungseinrichtung 110, ob ein Kommunikationsauftrag bezüglich der drahtlosen Kommunikationseinrichtung 20 vorliegt. Wenn ja, wird unter Steuerung der Datenverwaltungseinrichtung 70 der Kommunikationsauftrag abgearbeitet, indem der im Informationsspeicher 72 hinterlegte neue kryptografische Schlüssel über die aufgebaute Kommunikationsverbindung zur Hardware-Sicherheitseinrichtung 170 übertragen wird.

Wird die Kommunikationsverbindung abgebrochen, weil beispielsweise die mobile drahtlose Kommunikationseinrichtung 20 den Versorgungsbereich des stationäre Zugangspunktes 40 verlassen hat, und wurde in der Datenverwaltungseinrichtung 110 keine Statusinformation, welche den vollständigen Empfang der Daten signalisiert, von der Hardware-Sicherheitseinrichtung 170 empfangen, wartet die Datenverwaltungseinrichtung 110 auf den Aufbau einer erneuten Kommunikationsverbindung. Sobald die mobile drahtlose Kommunikationseinrichtung 20 wieder in den Versorgungsbereich eines stationären Zugangspunktes, der nicht dargestellt ist, eintritt, wird wiederum eine Kommunikationsverbindung von der Hardware-Sicherheitseinrichtung 170 der mobilen drahtlosen Kommunikationseinrichtung 20 unter Verwendung der IP-Adresse der zentralen Managementeinrichtung 90 aufgebaut, und eine Identifizierung der drahtlosen Kommunikationseinrichtung 20 gegenüber der zentralen Managementeinrichtung 90 durchgeführt. Anschließend wird wiederum in der zuvor beschriebene Art und Weise unter Steuerung der zentralen Managementeinrichtung 90 eine Kommunikationsverbindung zwischen der Hardware-Sicherheitseinrichtung 170 der mobilen drahtlosen Kommunikationseinrichtung 20 aufgebaut, um den Kommunikationsauftrag, das heißt die noch nicht von der Hardware-Sicherheitseinrichtung 170 empfangenen Daten aus dem Informationsspeicher 72 auszulesen und zur mobilen drahtlosen Kommunikationseinrichtung 20 beziehungsweise zur Hardware-Sicherheitseinrichtung 170 gesichert zu übertragen. Diese Schritte werden solange wiederholt, bis alle Daten in der Hardware-Sicherheitseinrichtung 170 empfangen worden sind. In ähnlicher Weise erfolgt eine gesicherte Kommunikation zwischen der Hardware-Sicherheitseinrichtung 170' der stationären Kommunikationseinrichtung 30 und der Datenverwaltungseinrichtung 100 unter Mithilfe der zentralen Managementeinrichtung 90.

Angemerkt sei noch, dass die in der mobilen drahtlosen Kommunikationseinrichtung 20 von der jeweiligen Datenverwaltungseinrichtung empfangene Information beispielsweise über die Ein-/Ausgabe-Einrichtung 23 visualisiert oder über die Kommunikationsschnittstelle 171 zur weiteren Verarbeitung bereitgestellt werden kann. Ferner sei angemerkt, dass auch die stationäre drahtlose Kommunikationseinrichtung 30 über einsprechende Ein-/Ausgabe-Einrichtungen verfügen kann.

### Bezugszeichenliste

- 10-10": Kommunikationssystem
- 20: mobile drahtlose Kommunikationseinrichtung
- 21: drahtlose Kommunikationsschnittstelle
- 22: Steuereinheit, z.B. Mikroprozessor
- 23: Ein- und/oder Ausgabeeinrichtung
- 24: drahtlose Kommunikationsschnittstelle
- 30: stationäre drahtlose Kommunikationseinrichtung
- 31: drahtlose Kommunikationsschnittstelle
- 32: Steuereinheit, z.B. Mikroprozessor
- 33: Sensor
- 40: stationärer drahtloser Zugangspunkt
- 50: mobiler drahtloser Zugangspunkt
- 60: erstes Kommunikationsnetzwerk, z.B. das Internet
- 70: Datenverwaltungseinrichtung
- 71: Kommunikationsschnittstelle, insbesondere zum Anschalten an ein Kommunikationsnetzwerk
- 72: Informationsspeicher
- 73: Programmspeicher
- 74: Steuereinheit, z.B. Mikroprozessor
- 75: Kommunikationsschnittstelle, insbesondere zur Programmierung der Datenverwaltungseinrichtung
- 80: Datenverwaltungseinrichtung
- 90: zentrale Managementeinrichtung
- 100, 110: Datenverwaltungseinrichtung
- 120-130: mobile drahtlose Kommunikationseinrichtung
- 140: zweites Kommunikationsnetzwerk, z.B. ein Mobilfunknetz
- 141, 143: BTS, Base Transceiver System
- 142: MSC, Mobile Service Switching Center
- 150, 160: Datenverwaltungseinrichtung
- 170, 170': Hardware-Sicherheitseinrichtung, z.B. ein Sicherheitstoken
- 171, 171': Kommunikationsschnittstelle
- 172, 172': Programmspeicher
- 173, 173': Steuereinheit, z.B. Mikroprozessor
- 174, 174': Datenspeicher
- 180: mobile kontaktbehaftete Kommunikationseinrichtung182 kontaktbehaftete Kommunikationsschnittstelle
- 190: Kartenleseeinrichtung
- 200: kontaktbehaftete Kommunikationsverbindung

## Patentansprüche

1. Verfahren zur gesicherten und automatisierten Kommunikation zwischen einer Datenverwaltungseinrichtung (70, 80; 150, 160) und einer Hardware-Sicherheitseinrichtung (170, 170') einer Kommunikationseinrichtung (20, 30; 120, 130, 180) in einem Kommunikationssystem (10, 10", 10"'), welches wenigstens ein Kommunikationsnetzwerk (60, 140) aufweist, mit folgenden Schritten:
a) Aufbauen einer Kommunikationsverbindung zwischen einer Datenverwaltungseinrichtung (70, 80; 150, 150) und einer in einer Kommunikationseinrichtung (20, 30; 120, 130, 180) angeordneten Hardware-Sicherheitseinrichtung (170, 170') über wenigstens ein Kommunikationsnetzwerk (60, 140) für ein Zeitintervall begrenzter Länge, wobei die Datenverwaltungseinrichtung (70, 80; 150, 160) und die Kommunikationseinrichtung (20, 30; 120, 130, 180) eindeutig einander zugeordnet sind und wobei die Hardware-Sicherheitseinrichtung (170, 170') zur Identifizierung der Kommunikationseinrichtung (20, 30; 120, 130, 180) ausgebildet ist;
b) Identifizierung der Kommunikationseinrichtung (20, 30; 120, 130, 180) gegenüber der Datenverwaltungseinrichtung (70, 80; 150, 160);
c) Prüfen, in der Datenverwaltungseinrichtung (70, 80; 150, 160), ob ein Kommunikationsauftrag bezüglich der Kommunikationseinrichtung (20, 30, 120, 130, 180) vorliegt;
d) wenn ja, Abarbeiten, unter Steuerung der Datenverwaltungseinrichtung (70, 80; 150, 160), des Kommunikationsauftrags nach erfolgreicher Identifizierung, indem Daten gesichert über die in Schritt a) aufgebaute Kommunikationsverbindung übertragen werden.

2. Verfahren nach Anspruch 1,
**gekennzeichnet durch** folgende weitere Schritte:
e) Prüfen, in der Datenverwaltungseinrichtung (70, 80; 150, 160), ob der Kommunikationsauftrag während der in Schritt a) aufgebauten Kommunikationsverbindung vollständig abgearbeitet worden ist,
f) wenn nicht, Wiederholen der Schritte a) bis e) solange, bis der Kommunikationsauftrag vollständig abgearbeitet worden ist.

3. Verfahren zur gesicherten und automatisierten Kommunikation zwischen einer Datenverwaltungseinrichtung (100, 110) und einer Hardware-Sicherheitseinrichtung (170, 170') einer Kommunikationseinrichtung (20, 30) in einem Kommunikationssystem (10'), welches wenigstens ein Kommunikationsnetzwerk (60, 140) aufweist, mit folgenden Schritten:
a) Aufbauen einer Kommunikationsverbindung zwischen einer zentralen Managementeinrichtung (90) und einer in einer Kommunikationseinrichtung (20, 30) implementierten Hardware-Sicherheitseinrichtung (170, 170') über wenigstens ein Kommunikationsnetzwerk (60, 140), wobei die Hardware-Sicherheitseinrichtung (170, 170') zur Identifizierung der Kommunikationseinrichtung (20, 30) ausgebildet ist;
b) Identifizierung der Kommunikationseinrichtung (20, 30) gegenüber der zentralen Managementeinrichtung(90);
c) nach erfolgreicher Identifizierung Aufbauen, unter Steuerung der zentralen Managementeinrichtung (90), einer Kommunikationsverbindung zwischen einer Datenverwaltungseinrichtung (100, 110) und der Hardware-Sicherheitseinrichtung (170, 170') der Kommunikationseinrichtung (20, 30) über das wenigstens ein Kommunikationsnetzwerk (60, 140) für ein Zeitintervall begrenzter Länge, wobei die Datenverwaltungseinrichtung (100, 110) und die Kommunikationseinrichtung (20, 30) eindeutig einander zugeordnet sind;
d) Prüfen, in der Datenverwaltungseinrichtung (100, 110), ob ein Kommunikationsauftrag bezüglich der Kommunikationseinrichtung (20, 30) vorliegt;
e) wenn ja, Abarbeiten, unter Steuerung der Datenverwaltungseinrichtung (100, 110), des Kommunikationsauftrags, indem Daten gesichert über die in Schritt c) aufgebaute Kommunikationsverbindung übertragen werden.

4. Verfahren nach Anspruch 3,
**gekennzeichnet durch** folgende weitere Schritte:
f) Prüfen, in der Datenverwaltungseinrichtung (70, 80; 100, 110; 150, 160), ob der Kommunikationsauftrag während der in Schritt c) aufgebauten sicheren Kommunikationsverbindung vollständig abgearbeitet worden ist;
g) wenn nicht, Wiederholen der Schritte a) bis f) solange, bis der Kommunikationsauftrag vollständig abgearbeitet worden ist.

5. Verfahren nach Anspruch 1,
**dadurch gekennzeichnet, dass**
die Kommunikationseinrichtung (20, 30; 120, 130, 180) eine drahtlose Kommunikationseinrichtung ist und dass in Schritt a) eine Kommunikationsverbindung über einen drahtlosen Zugangspunkt (40, 50) des Kommunikationssystems (10, 10', 10") aufgebaut werden kann, sobald die drahtlose Kommunikationseinrichtung (20, 30; 120, 130) in den Versorgungsbereich des drahtlosen Zugangspunktes (40, 50) gelangt oder dass die Kommunikationseinrichtung (180) eine kontaktbehaftete Kommunikationseinrichtung ist und dass in Schritt a) eine Kommunikationsverbindung über eine kontaktbehaftete Einrichtung (190) des Kommunikationssystems (10"') aufgebaut werden kann, sobald die kontaktbehaftete Kommunikationseinrichtung (180) mit der kontaktbehafteten Einrichtung (190) elektrisch verbunden wird.

6. Verfahren nach Anspruch 3,
**dadurch gekennzeichnet, dass**
die Kommunikationseinrichtung (20, 30) eine drahtlose Kommunikationseinrichtung ist und dass in den Schritten a) und c) jeweils eine Kommunikationsverbindung über einen drahtlosen Zugangspunkt (40, 50) des Kommunikationssystems (10, 10', 10") aufgebaut werden kann, sobald die drahtlose Kommunikationseinrichtung (20, 30; 120, 130) in den Versorgungsbereich des drahtlosen Zugangspunktes (40, 50) gelangt, oder dass die Kommunikationseinrichtung eine kontaktbehaftete Kommunikationseinrichtung ist und dass in den Schritten a) und c) jeweils eine Kommunikationsverbindung über eine kontaktbehaftete Einrichtung des Kommunikationssystems aufgebaut werden kann, sobald die kontaktbehaftete Kommunikationseinrichtung mit der kontaktbehafteten Einrichtung (190) elektrisch verbunden wird.

7. Verfahren nach Anspruch 5 oder 6,
**dadurch gekennzeichnet, dass**
die drahtlose Kommunikationseinrichtung (20; 120, 130) beweglich ist und der drahtlose Zugangspunkt (40) stationär ist, oder dass
die drahtlose Kommunikationseinrichtung (30) stationär ist und der drahtlose Zugangspunkt (50) beweglich ist.

8. Verfahren nach einem der vorstehenden Ansprüche, **dadurch gekennzeichnet, dass**
eine Statusinformation von der Kommunikationseinrichtung (20, 30; 120, 130, 180) zur Datenverwaltungseinrichtung (70, 80; 100, 110; 150, 160) übertragen wird, welche die vollständige Abarbeitung des Kommunikationsauftrags signalisiert.

9. Verfahren nach einem der vorstehenden Ansprüche, **dadurch gekennzeichnet, dass**
der Kommunikationsauftrag signalisiert, dass eine zur Hardware-Sicherheitseinrichtung (170, 170') der Kommunikationseinrichtung (20, 30; 120, 130, 180) zu übertragende Information vorliegt, und dass die Schritte a) bis e) gemäß Anspruch 2 oder die Schritte a) bis f) gemäß Anspruch 4 solange wiederholt werden, bis die gesamte Information zur Hardware-Sicherheitseinrichtung (170, 170') der Kommunikationseinrichtung (20, 30; 120, 130, 180) übertragen worden ist.

10. Verfahren nach Anspruch 9,
**dadurch gekennzeichnet, dass**
die zur Hardware-Sicherheitseinrichtung der Kommunikationseinrichtung zu übertragenden Information verschlüsselt in der Datenverwaltungseinrichtung gespeichert wird.

11. Verfahren nach Anspruch 9 oder 10,
**dadurch gekennzeichnet, dass**
die zur Hardware-Sicherheitseinrichtung (170, 170') der Kommunikationseinrichtung (20, 30; 120, 130, 180) zu übertragende Information sicherheitsbezogene Daten, insbesondere Sicherheitsupdates für eine in der Hardware-Sicherheitseinrichtung (170, 170') gespeicherte Sicherheitssoftware, enthält.

12. Verfahren nach einem der vorstehenden Ansprüche, **dadurch gekennzeichnet, dass** unterschiedliche Kommunikationsaufträge in der Datenverwaltungseinrichtung ((70, 80; 100, 110; 150, 160) vorliegen, wobei zumindest einer der Kommunikationsaufträge die Übertragung einer Information von der Hardware-Sicherheitseinrichtung (170, 170') der Kommunikationseinrichtung (20, 30; 120, 130, 180) zur Datenverwaltungseinrichtung (70, 80; 100, 110; 150, 160) betreffen kann, und dass die Abarbeitung der unterschiedlichen Kommunikationsaufträge von der Datenverwaltungseinrichtung priorisiert gesteuert wird.

13. Verfahren nach einem der vorstehenden Ansprüche,
**dadurch gekennzeichnet, dass**
eine in Schritt a) gemäß Anspruch 1 oder eine in Schritt c) gemäß Anspruch 3 aufgebaute Kommunikationsverbindung von der Datenverwaltungseinrichtung (70, 80; 100, 110; 150, 160) beendet werden kann, wenn kein Kommunikationsauftrag in der Datenverwaltungseinrichtung (70, 80; 100, 110; 150, 160) vorliegt.

14. Kommunikationssystem (10, 10") zur gesicherten und automatisierten Kommunikation zwischen einer Datenverwaltungseinrichtung (70, 80; 150, 160) und einer Hardware-Sicherheitseinrichtung (170, 170') einer Kommunikationseinrichtung (20, 30; 120, 130, 180), mit folgenden Merkmalen:
wenigstens ein Kommunikationsnetzwerk (60, 140), eine Kommunikationseinrichtung (20, 30; 120, 130, 180), welche eine Hardware-Sicherheitseinrichtung (170, 170') zur Identifizierung der Kommunikationseinrichtung (20, 30; 120, 130, 180) aufweist,
eine Datenverwaltungseinrichtung (70, 80; 150, 160), die der Kommunikationseinrichtung (20, 30; 120, 130, 180) eindeutig zugeordnet ist, wobei die Datenverwaltungseinrichtung (70, 80; 150, 160) eine Speichereinrichtung (72) aufweist, in welcher wenigstens eine Information für die Hardware-Sicherheitseinrichtung (170, 170') der Kommunikationseinrichtung (20, 30; 120, 130, 180) speicherbar ist,
wobei die Kommunikationseinrichtung (20, 30; 120, 130, 180) dazu ausgebildet ist, unter Ansprechen auf ein vorbestimmtes, sich wiederholendes Ereignis jeweils den Aufbau einer zeitlich begrenzten Kommunikationsverbindung über das wenigstens eine Kommunikationsnetzwerk (60, 140) von der Hardware-Sicherheitseinrichtung (170, 170') zur Datenverwaltungseinrichtung (70, 80; 150, 160) einzuleiten und sich gegenüber der Datenverwaltungseinrichtung (70, 80; 150, 160) zu identifizieren, wobei
die Datenverwaltungseinrichtung (70, 80; 150, 160) dazu ausgebildet ist,
- zu prüfen, ob ein Kommunikationsauftrag bezüglich der Kommunikationseinrichtung (20, 30; 120, 130, 180) vorliegt,
- wenn ja, die Abarbeitung des Kommunikationsauftrags nach erfolgreicher Identifizierung der Kommunikationseinrichtung (20, 30; 120, 130, 180) zu steuern, indem Daten gesichert über die jeweilige aufgebaute Kommunikationsverbindung übertragen werden.

15. Kommunikationssystem (10') zur gesicherten und automatisierten Kommunikation zwischen einer Datenverwaltungseinrichtung (100, 110) und einer Hardware-Sicherheitseinrichtung (170, 170') einer Kommunikationseinrichtung (20, 30), mit folgenden Merkmalen:
wenigstens ein Kommunikationsnetzwerk (60, 140), eine zentrales Managementeinrichtung (90), eine Kommunikationseinrichtung (20, 30), welche eine Hardware-Sicherheitseinrichtung (170, 170') zur Identifizierung der Kommunikationseinrichtung (20, 30) aufweist,
eine Datenverwaltungseinrichtung (100, 110), die der Kommunikationseinrichtung (20, 30) eindeutig zugeordnet ist, wobei die Datenverwaltungseinrichtung (100, 110) eine Speichereinrichtung aufweist, in welcher wenigstens eine Information für die Hardware-Sicherheitseinrichtung (170, 170') der Kommunikationseinrichtung (20, 30) speicherbar ist,
wobei die Kommunikationseinrichtung (20, 30) dazu ausgebildet ist, unter Ansprechen auf ein vorbestimmtes, sich wiederholendes Ereignis jeweils den Aufbau einer Kommunikationsverbindung über das wenigstens eine Kommunikationsnetzwerk (60, 140) von der Hardware-Sicherheitseinrichtung (170, 170') zur zentralen Managementeinrichtung (90) einzuleiten und sich gegenüber der zentralen Managementeinrichtung (90) zu identifizieren, wobei
die zentrale Managementeinrichtung (90) dazu ausgebildet ist, nach jeder erfolgreichen Identifizierung der Kommunikationseinrichtung (20, 30) den Aufbau
einer zeitlich begrenzten Kommunikationsverbindung zwischen der Hardware-Sicherheitseinrichtung (170, 170') der Kommunikationseinrichtung (20, 30) und der Datenverwaltungseinrichtung (100, 110) über das wenigstens eine Kommunikationsnetzwerk (60, 140) zu steuern, wobei die Datenverwaltungseinrichtung (100, 110) dazu ausgebildet ist,
- zu prüfen, ob ein Kommunikationsauftrag bezüglich der Kommunikationseinrichtung (20, 30) vorliegt, und
- wenn ja, die Abarbeitung des Kommunikationsauftrags zu steuern, indem Daten gesichert über die jeweilige aufgebaute Kommunikationsverbindung übertragen werden.

16. Kommunikationssystem nach Anspruch 14 oder 15,
**dadurch gekennzeichnet, dass**
die Datenverwaltungseinrichtung (70, 80; 150, 160) dazu ausgebildet ist, zu prüfen, ob der Kommunikationsauftrag während einer aufgebauten sicheren Kommunikationsverbindung vollständig abgearbeitet worden ist, und wenn nicht, die Abarbeitung des Kommunikationsauftrags während wenigstens einer weiteren, zwischen der Hardware-Sicherheitseinrichtung (170, 170') der Kommunikationseinrichtung (20, 30; 120, 130) und der Datenverwaltungseinrichtung (70, 80; 150, 160) aufgebauten Kommunikationsverbindung fortzusetzen.

17. Kommunikationssystem nach einem der Ansprüche 14 bis 16,
**gekennzeichnet durch**
wenigstens einen drahtlosen Zugangspunkt (40, 50), welcher mit dem wenigstens einen Kommunikationsnetzwerk (60, 140) verbunden ist, wobei die Kommunikationseinrichtung (20, 30) eine drahtlose Kommunikationseinrichtung ist und dazu ausgebildet ist, den Eintritt in den Versorgungsbereich des wenigstens einen drahtlosen Zugangspunkts (40, 50) zu erfassen und unter Ansprechen hierauf den Aufbau einer Kommunikationsverbindung über den drahtlosen Zugangspunkt (40, 50) zur Datenverwaltungseinrichtung (70, 80; 150, 160) oder zur zentralen Managementeinrichtung (90) einzuleiten, oder **gekennzeichnet durch**
wenigstens eine kontaktbehaftete Einrichtung (190), welche mit dem wenigstens einen Kommunikationsnetzwerk (60) verbunden ist, wobei
die Kommunikationseinrichtung eine kontaktbehaftete Kommunikationseinrichtung (180) ist und dazu ausgebildet ist, einen elektrischen Verbindung mit der wenigstens einen kontaktbehafteten Einrichtung (190) zu erfassen und unter Ansprechen hierauf den Aufbau einer Kommunikationsverbindung über die kontaktbehaftete Einrichtung (190) zur Datenverwaltungseinrichtung (70, 80; 150, 160) oder zur zentralen Managementeinrichtung (90) einzuleiten.
